Europäisches Patentamt

European Patent Office

Office européen des brevets

(11) Numéro de publication: **0 059 920**
**B1**

(12) **FASCICULE DE BREVET EUROPEEN**

(45) Date de publication du fascicule du brevet: **27.12.84**

(21) Numéro de dépôt: **82101583.1**

(22) Date de dépôt: **02.03.82**

(51) Int. Cl.³: **H 04 N 1/032**

㊴ Titre: **Tête d'impression d'image.**

(30) Priorité: **06.03.81 FR 8104482**

(43) Date de publication de la demande:
**15.09.82 Bulletin 82/37**

(45) Mention de la délivrance du brevet:
**27.12.84 Bulletin 84/52**

(84) Etats contractants désignés:
**AT BE DE FR GB IT LU NL SE**

(56) Documents cités:
**EP-A-0 000 070**
**FR-A-2 369 759**
**GB-A-2 050 948**
**US-A-3 124 804**
**US-A-3 903 594**
**US-A-3 931 761**

(73) Titulaire: **COMPAGNIE INDUSTRIELLE DES TELECOMMUNICATIONS CIT-ALCATEL S.A. dite:**
**12, rue de la Baume**
**F-75008 Paris (FR)**

(72) Inventeur: **de Kermadec, Alain**
**15, rue des Anciens Béliers**
**F-78730 Rochefort en Yvelines (FR)**
Inventeur: **Delanoe, Christian**
**44, rue Albert Sarraut**
**F-78000 Versailles (FR)**
Inventeur: **Normand, Gérard Boussieres**
**F-25320 Montferrand Le Chateau (FR)**

(74) Mandataire: **Weinmiller, Jürgen et al**
**Zeppelinstrasse 63**
**D-8000 München 80 (DE)**

Courier Press, Leamington Spa, England.

**Description**

La présente invention porte sur une tête d'impression d'image, en particulier pour l'impression d'image de document dans un appareil fac-similé.

On sait que, dans un appareil fac-similé, la reproduction d'un document s'effectue généralement à l'aide d'une tête d'impression venant balayer un support d'image, le plus souvent un papier sensible, par lignes de balayage successives; la tête est excitée par des données issues d'une analyse de ce document et définissant le contenu de celui-ci par points et forme sur le support, en mettant en oeuvre un procédé d'impression donné, une image du document composée de points d'image correspondant aux points du document.

Selon certains procédés d'impression faisant appel à un support d'image tel par exemple un papier électrochimique, électrothermique ou thermique, on forme une image du document à reproduire en provoquant en certains points du papier, déterminés par les données définissant le contenu du document, une modification localisée de son aspect, par exemple une modification de coloration. Ainsi, avec un papier électrochimique ou électrothermosensible, cette modification localisée est obtenue par application sur le papier d'un stylet conducteur électrique et passage d'un courant entre le stylet et le papier; le passage de ce courant provoque dans le papier soit une réaction chimique soit un échauffement par effet Joule selon le caractère électrochimique ou électrothermosensible du papier utilisé, entraînant une variation de coloration. Avec un papier thermosensible c'est la chaleur dégagée par effet Joule par un stylet à élément résistif parcouru par un courant électrique et amené contre ou à très faible distance du papier, qui, en déclenchant une réaction soit physique soit chimique dans celui-ci, entraîne une modification localisée de coloration.

On connaît un autre procédé d'impression, le procédé d'impression électrostatique, qui fait appel à un support d'image formé d'un substrat électriquement conducteur recouvert d'une mince couche diélectrique. Selon ce procédé, on forme sur le support une image latente du document à reproduire en provoquant en certains points de ce support également déterminés par les données définissant le contenu du document, l'apparition de charges électrostatiques. La formation localisée de telles charges peut être obtenue en appliquant contre le support un stylet ou électrode et une contre-électrode, l'électrode et la contre-électrode étant soit toutes deux du côté de la couche diélectrique, soit l'une, l'électrode, du côté de la couche diélectrique et l'autre, la contre-électrode, du côté du substrat conducteur, et en établissant entre l'électrode et la contre-électrode une différence de potentiel électrique importante de l'ordre de plusieurs centaines de volts; cette différence de potentiel déclenche une certaine ionisation de l'air au voisinage de la couche diélectrique du support au niveau de l'électrode qui est de forme effilée, la contre-électrode, de dimensions plus importantes, étant elle de forme plate, ce qui provoque un apport local de charges électriques à la surface de cette couche diélectrique à ce niveau. L'image latente ainsi formée est ensuite développée puis fixée soit sur le support initial (constitué alors généralement d'un papier diélectrique) soit sur un autre support (généralement du papier ordinaire) après transfert sur cette autre support, selon l'une ou l'autre des diverses techniques connues qui ne seront pas rappelées ici car sans rapport direct avec l'invention.

On connaît des têtes d'impression comportant autant de stylets d'impression qu'il y a de points d'image à inscrire dans une ligne de balayage du support d'image. Ces stylets peuvent être alignés sur une seule rangée, ils sont alors disposés au pas de définition des points d'image le long d'une ligne de balayage; ils peuvent être alignés sur deux rangées parallèles, séparées ou non par une ligne d'isolement de largeur égale à la largeur d'une ligne de balayage; ist sont alors disposés dans chaque rangée au double du pas de définition des points d'image le long d'une ligne de balayage et en regard des intervalles entre stylets de l'autre rangée. Dans un cas comme dans l'autre, l'impression complète d'une image est obtenue par déplacement relatif du support d'image et de la tête d'impression selon une seule direction, perpendiculaire à la rangée ou aux rangées de stylets.

Le pas de définition des points d'image le long d'une ligne de balayage étant généralement très faible (125 $\mu$m pour les appareils fac-similé dits du groupe III), l'obtention à l'échelle industrielle de ces têtes d'impression multistylets connues nécessite la mise en oeuvre d'un outillage très spécialisé.

La présente invention a pour but de réaliser une tête d'impression multistylets, du type à conducteurs multiples isolés les uns des autres d'une part reliés ou portant les stylets respectifs de la tête et d'autre part connectés à des circuits extérieurs, pour l'alimentation des stylets, de structure permettant notamment l'obtention directe des connexions entre lesdits conducteurs et lesdits circuits extérieurs, sans nécessiter l'utilisation d'un outillage spécialisé et/ou la mise en oeuvre de techniques complexes de raccordement propres à réaliser de telles connexions, compte tenu du faible pas, de quelques centaines de microns, entre stylets.

La présente invention a pour objet une tête d'impression comportant une pluralité de stylets formés respectivement par des premières extrémités de conducteurs électriques disposées selon des lignes distinctes parallèles en étant positionnées à pas régulier sur chaque ligne et décalées d'une ligne à une autre, caractérisée en ce que lesdits conducteurs électriques sont agencés en groupes de plusieurs rangées distinctes s'épanouissant pour les différents groupes depuis lesdites lignes respectivement sensiblement selon des demi-plans distincts, tout au moins au départ de ces lignes, lesdites premières extrémités des conducteurs de chaque rangée de chacun desdits groupes ayant des rangs égaux modulo le nombre de rangées de ce groupe, sur leur ligne.

Dans une réalisation préférentielle, la tête d'impression comporte huit rangées de conducteurs réunies en deux groupes de quatre rangées chacun, et les premières extrémités des conducteurs de ces deux groupes sont disposées respectivement sur deux lignes distinctes parallèles, les stylets de l'une des lignes étant en regard des intervalles de l'autre ligne.

De préférence également les conducteurs de chacune desdites rangées sont maintenus mécaniquement par une pièce de support individuelle, en matériau isolant.

Les caractéristiques et avantages de la présente invention ressortiront de la description fait ci-après d'un mode préféré de réalisation illustré dans les dessins ci-annexés. Dans ces dessins:

— la figure 1 est une vue en coupe, selon sa largeur, de la tête d'impression selon l'invention,

— la figure 2 est une vue en coupe, selon le même plan de coupe que celui de la figure 1, à échelle agrandie de la partie supérieure de la tête,

— la figure 3 est une vue partielle en perspective et en coupe d'un premier ensemble appelé réglette de conducteurs rentrant dans ladite tête d'impression,

— la figure 4 est une vue partielle en élévation d'une réglette selon la flèche IV de la figure 3,

— la figure 5 est une vue partielle en perspective et en coupe d'un second ensemble appelé réglette de conducteurs auxiliaires rentrant dans ladite tête d'impression,

— la figure 6 est une vue en perspective d'un élément du deuxième ensemble selon la figure 5,

— la figure 7 est une vue partielle de dessus de la partie supérieure de la tête d'impression, à échelle très agrandie, faite selon la flèche VII de la figure 2,

— la figure 8 est une vue partielle de dessus de la tête d'impression des figures 1 et 2, également à échelle agrandie,

— la figure 9 montre, vue de dessus, ladite tête d'impression,

— la figure 10 montre, vue en élévation, la tête représentée dans la figure 9,

— la figure 11 représente la tête d'impression vue du côté des diverses connexions,

— la figure 12 représente le schéma électrique du circuit de connexion porté par une carte rentrant dans la tête d'impression,

— la figure 13 représente le schéma électrique du circuit d'adressage porté par une autre carte rentrant dans la tête d'impression.

La tête illustrée dans ces dessins est destinée par exemple à la formation d'image latente électrostatique sur un support tel un papier diélectrique balayé par lignes de balayage successives par la tête qui comporte autant de stylets d'impression qu'il y a de points d'image dans une ligne de balayage. A titre d'exemple on considère qu'une ligne de balayage se compose de 1728 points régulièrement répartis sur 216 mm, ce qui correspond à un pas de définition des points d'image le long d'une ligne de balayage de 125 $\mu$m. On considère en outre que la largeur d'une ligne de balayage est de 130 $\mu$m. La tête d'impression comprend donc 1728 stylets pour l'impression de points d'image chacun sensiblement de dimensions 125 $\mu$m × 130 $\mu$m.

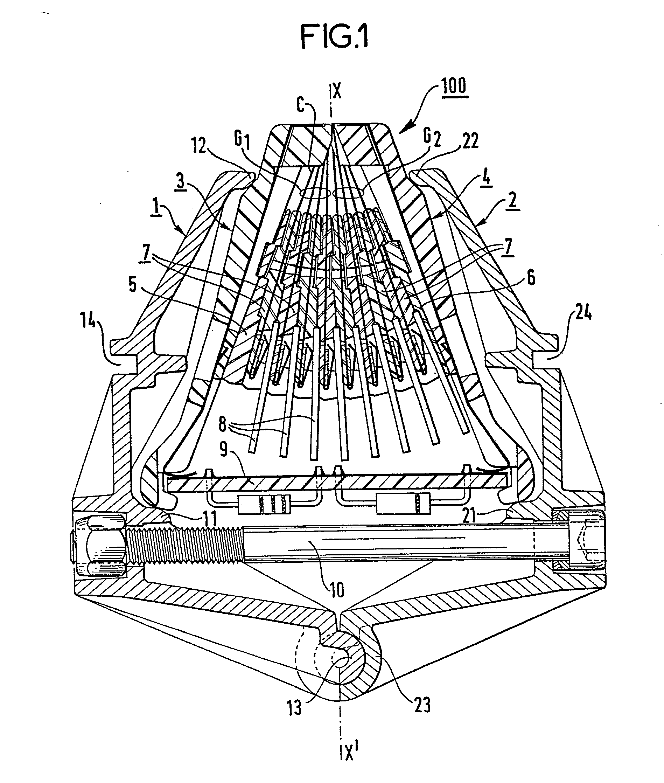

Dans la figure 1, on voit que la tête d'impression désignée par la référence 100, comporte, montées sensiblement à l'intérieur de deux demi-boîtiers longitudinaux 1 et 2 et maintenues entre deux paires de pieds de serrage longitudinaux 11, 21 et 12, 22 qu'ils définissent intérieurement quand ils sont assemblés l'un à l'autre, deux pièces 3 et 4 dites réglettes de conducteurs auxiliaires, en appui sur les deux demi-boîtiers respectivement, deux pièces cales 5 et 6 en appui sur les réglettes de conducteurs auxiliaires 3 et 4, respectivement et une pluralité de pièces 7, ici au nombre de huit, dites réglettes de conducteurs, en appui les unes sur les autres et entre les pièces cales 5 et 6 et chacune associée à une carte de circuit imprimé 8, ainsi qu'il sera vu ci-après.

Ces pièces 3 à 8 intérieures aux deux demi-boîtiers constituent une sorte de faisceau de pièces qui divergent dans l'espace intérieur de section sensiblement trapézoïdale défini entre les paires de pieds de serrage 11, 21 et 12, 22 précités, la petite base de ce trapèze de section qui déborde des deux demi-boîtiers constituant le sommet ou partie supérieure de la tête, la grande base de ce trapèze étant définie par une autre carte de circuit imprimé 9, montée entre les deux réglettes de conducteurs auxiliaires 3 et 4 auxquelles elle est associée, ainsi qu'il sera vu ci-après.

Les deux demi-boîtiers 1 et 2 sont assemblés l'un à l'autre par emboîtement de leurs portions terminales respectives 13 et 23 au-delà de la grande base de la section trapézoïdale définie; ces portions terminales définissent des parties mâle et femelle de cet emboîtement qui avantageusement appartiennent alternativement à l'un et l'autre des deux demi-boîtiers, sur la longueur de ceux-ci, et qui ont chacune sensiblement la forme d'un demi-tube d'axe s'étendant selon la longueur de la tête.

Les deux demi-boîtiers assemblés sont maintenus réunis par des boulons tels que 10, ces boulons 10 sont alignés sur une rangée s'étendant sur la longueur de la tête 100, entre la paire de pieds de serrage 11, 21 et les portions terminales 13, 23 emboîtées; ils traversent les parois des demi-boîtiers, à un niveau où l'écartement entre ces parois est quasiment maximal.

On note en outre, que les deux demi-boîtiers définissent extérieurement une paire de rails de guidage 14, 24, pour la tête, sur des support de guidage 15 et 24 extérieurs (figure 11).

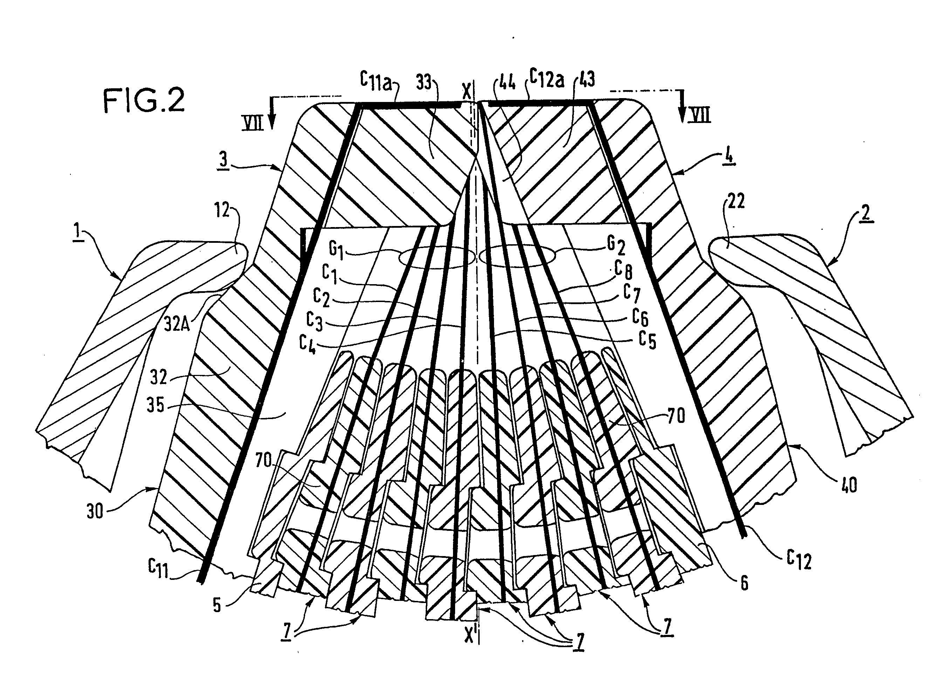

En regard de cette figure 1 et de la figure 2, il apparit que la tête d'impression comporte huit rangées longitudinales de conducteurs électriques, appartenant respectivement aux huit réglettes de conducteurs 7, référencés dans la figure 1 par la référence générale C et dans la figure 2 par $C_1$ à $C_8$ en ce qui concerne les conducteurs des huit rangées respectivement, un seul conducteur de chacune de ces huit rangées étant visible dans les figures 1 et 2.

Les huit rangées des conducteurs $C_1$ à $C_8$ sont associées en deux groupes $G_1$ et $G_2$ de quatre rangées chacun, les rangées des conducteurs $C_1$, $C_2$, $C_3$ et $C_4$ composant l'un de ces deux groupes $G_1$ et celles des conducteurs $C_5$, $C_6$, $C_7$ et $C_8$ l'autre groupe $G_2$. Les conducteurs des rangées de chacun de ces groupes ont des premières extrémités, qui forment chacune un des stylets de la tête, alignés à pas régulier sur une ligne s'étendant perpendiculairement aux plans des figures 1 et 2, le long de laquelle les extrémités des conducteurs d'une même rangée ont même rang modulo quatre pour quatre rangées dans le groupe, et au départ de laquelle les rangées de ce groupe divergent en étant disposés sensiblement selon quatre demi-plans distincts respectivement; ces quatre demi-plans qui sont donc limités à une même droite selon laquelle sont alignés lesdites premières extrémités, forment trois angles dièdres de valeurs voisines, ici de l'ordre de 6° à 7°, l'un de ces angles dièdres étant adjacent aux deux autres et situé entre eux.

Les premières extrémités des conducteurs $C_1$ à $C_8$, formant les stylets de la tête d'impression respectivement, sont donc disposés sur deux lignes parallèles d'où s'épanouissent les rangées de conducteurs des deux groupes respectivement en étant disposées sensiblement au départ de ces deux lignes selon les faces de six angles dièdres de valeurs voisines formant deux groupes de trois angles dièdres ayant même arête; ces deux groupes d'angles dièdres sont symétriques par rapport à un plan XX' constituant un plan médian pour la tête et de part et d'autre duquel ils sont respectivement situés, l'inclinaison entre les deux faces libres des deux angles dièdres les plus proches de ces deux groupes respectivement étant ici légèrement inférieure à celle entre les deux faces de l'un quelconque de ces six angles dièdres.

Dans chaque ligne, les premières extrémités des conducteurs de l'ensemble des quatre rangées sont disposées au double du pas de définition des points d'image le long d'une ligne de balayage, soit au pas de 250 $\mu m$ dans l'exemple chiffré considéré, le pas entre les premières extrémités des conducteurs d'une même rangée étant donc égal à huit fois ce pas de définition, c'est-à-dire ici égal à 1 mm.

Les deux lignes de stylets ainsi constituées sont distantes du double de la largeur d'une ligne de balayage, elles sont donc séparées par une ligne d'isolement de largeur égale à celle d'une ligne de balayage, et dans chacune de ces deux lignes, les stylets sont disposés en regard des intervalles entre stylets de l'autre ligne.

Dans chaque rangée de conducteurs, les conducteurs, qui sont constitués chacun d'un fil métallique flexible, sont parallèles et s'étendent donc au même pas régulier (de 1 mm) sur toute leur longueur. Sauf au niveau d'une deuxième extrémité, opposée à sa première extrémité formant stylet et qui est repliée pour former une borne de connexion, chacun des conducteurs $C_1$ à $C_8$ présente sensiblement la même inclinaison par rapport au plan XX' sur toute sa longueur, à une très légère pliure près, située à un niveau intermédiaire du conducteur, en ce qui concerne les conducteurs de certaines rangées, ainsi que précisé plus loin.

Les premières extrémités de conducteurs $C_1$ à $C_8$, alignées sur deux lignes, sont donc constituées ici uniquement de bords de ces conducteurs, ces bords étant en biseau en raison des inclinaisons relatives des rangées composées par ces conducteurs. Les conducteurs $C_1$ à $C_8$ ayant tous des sections droites identiques, les dimensions de ces bords en biseau, qui déterminent celles des points d'image inscrits, lors du fonctionnement de la tête d'impression, sur le papier diélectrique qui défile alors contre ces bords, varient pour les conducteurs d'une rangée à l'autre d'un même groupe; toutefois, pour des inclinaisons relatives des rangées, de l'ordre de grandeur indiqué ci-avant, ces variations sont suffisamment faibles pour que leur effet soit négligeable.

On notera que, en variante, les premières extrémités des conducteurs $C_1$ à $C_8$, alignées sur deux lignes, pourraient être constituées par de courtes portions terminales de ces conducteurs, rendues parallèles au plan XX' par déformation des conducteurs et dont les bords, destinés à être en contact avec le papier diélectrique, seraient alors droits.

Le soutien mécanique de chaque rangée de conducteurs qui, dans l'exemple chiffré considéré, en comprend 216 est assuré par une pièce de support individuelle en matériau isolant, identique d'une rangée à l'autre et de ce fait désignée par la référence 70 quelle que soit la rangée des conducteurs $C_1$, $C_2$ ... ou $C_8$ considérée et formant avec cette rangée de conducteurs l'ensemble appelé réglette de conducteurs désignée sous la référence 7 indépendamment de la rangée des conducteurs $C_1$, $C_2$ ... ou $C_8$ considérée. Dans chaque réglette 7, la pièce de support 70 forme une sorte de gaine longitudinale pour la rangée des conducteurs qui sont logés partiellement dans cette pièce dont ils débordent sur un premier de ses bords longitudinaux du côté de leurs premières extrémités formant stylets tandis que leurs secondes extrémités formant bornes de connexion sont repliées sur cette pièce du côté de son second bord longitudinal.

Chaque pièce de support 70 présente deux faces longitudinales ayant des formes complémentaires l'une de l'autre et respectivement identiques d'une réglette à l'autre, ainsi les réglettes 7 sont assemblées de telle façon que les deux faces longitudinales de chacune des pièces de support 70 viennent s'emboîter respectivement dans les faces de forme complémentaire des deux pièces de support adjacentes, à l'exception des deux pièces de support qui sont situées en bordure de cet assemblage et dont les faces longitudinales respectives tournées vers l'extérieur de l'assemblage sont emboîtées dans les faces en regard des pièces cales 5 et 6 respectivement. On précise que les indices 1 à 8 ont été affectés aux conducteurs C des huit rangées respectivement selon l'ordre croissant de succession des rangées de ces conducteurs de la pièce cale 5 à la pièce cale 6; ce sont donc les pièces de support des conducteurs C1 et C8 qui viennent s'emboîter dans les pièces cales 5 et 6, respectivement.

On notera que ce sont principalement les formes des pièces de support 70 qui assurent, les réglettes étant assemblées ainsi que précisé ci-avant, les inclinaisons relatives des huit rangées des conducteurs $C_1$ à $C_8$, les conducteurs $C_1$, $C_2$, $C_3$, $C_6$, $C_7$ et $C_8$ présentant en outre chacun une légère pliure, au niveau du premier bord longitudinal de sa pièce de support, plus accentuée pour les conducteurs $C_2$ et $C_7$ que pour les conducteurs $C_3$ et $C_6$ et pour les conducteurs $C_1$ et $C_8$ que pour les conduceurs $C_2$ et $C_7$, ces pliures étant rendues nécessaires pour la convergence des conducteurs $C_1$, $C_2$, $C_3$ et $C_4$ d'une part et des conducteurs $C_5$, $C_6$, $C_7$ et $C_8$ d'autres part sur respectivement deux lignes par le fait que les pièces de support 70 assemblées les unes contre les autres sont toutes identiques, elles feraient donc en l'absence de telles pliures converger les conducteurs $C_1$ à $C_8$ sur une ligne unique. En variante, ces légères pliures, qui en fait peuvent être imprimées aux conducteurs concernés lors du montage même de la tête, pourraient être supprimées soit en donnant à l'une des deux pièces de support des deux rangées centrales de conducteurs $C_4$ et $C_5$ une épaisseur plus grande qu'aux autres, soit en intercalant une pièce cale entre ces deux pièces de support.

Les positionnements longitudinaux relatifs corrects des rangées de conducteurs sont assurés quant à eux par des moyens qui seront précisés plus loin.

Dans les figures 1 et 2, les conducteurs $C_1$ à $C_8$ ont été représentés comme si le plan de la figure coupait chacune des pièces de support 70 au niveau d'un conducteur, dans le but de mieux mettre en évidence ces conducteurs, ceci en réalité ne se produisant pas en raison des décalages longitudinaux des réglettes les unes par rapport aux autres.

Aux huit rangées des conducteurs $C_1$ à $C_8$, c'est-à-dire en fait ici aux huit réglettes 7, sont associées les huit cartes support de circuit imprimé désignée par la même référence 8.

Chaque carte 8, sensiblement de même longueur que chacune des réglettes 7, porte un circuit de connexion des conducteurs de la réglette à laquelle elle est associée, en vue de leur alimentation électrique, à des entrées de la tête d'impression formées par exemple sur un connecteur (non visible dans ces figures) disposé en bout de carte à une première extrémité de la tête; ce circuit de connexion comporte des premières pistes conductrices (non représentées) tracées sur une des faces de la carte, en nombre égal à celui des conducteurs de la réglette et disposées au voisinage de l'un des bords longitudinaux de cette carte au pas (1 mm) des secondes extrémités de ces conducteurs, ces premières pistes étant reliées par ensembles, selon un schéma électrique qui sera précisé ultérieurement, aux entrées précitées de la tête, en nombre inférieur à celui des conducteurs de la réglette, au moyen par exemple de secondes pistes conductrices (non représentées) que comporte en outre ce circuit de connexion, tracées sur l'autre face de cette carte et connectées d'une part, à ces premières pistes, selon la technique classique des trous métallisés, et d'autre part à des contacts dudit connecteur, par soudure. Chaque carte 8 est enfichée entre deux pièces de support adjacentes, ou entre l'une des pièces de support terminales dans l'assemblage et la pièce cale adjacente, ici la pièce cale 6, du côté de son bord longitudinal où les premières pistes sont disposées à pas régulier et du côté des seconds bords longitudinaux de ces pièces de support dont les formes sont également prévues à cet effet, la face de cette carte portant les premières pistes étant tournée vers la pièce support de la réglette à laquelle elle est associée; les premières pistes de cette carte sont respectivement connectées aux deuxièmes extrémités des conducteurs qui sont repliées sur leur pièce de support du côté de la carte, ces connexions étant assurées chacune par simple contact grâce à une forme adaptée donnée à la seconde extrémité de chacun des conducteurs, permettant de bénéficier de l'élasticité du fil qui constitue ce conducteur pour assurer une certaine pression sur la première piste correspondante et garantissant ainsi un bon contact électrique.

Aux huit rangées de conducteurs $C_1$ à $C_8$ réunies en deux groupes $G_1$ et $G_2$ de la tête d'impression sont associées deux autres rangées longitudinales de conducteurs électriques, dits conducteurs auxiliaires, référencés $C_{11}$ et $C_{12}$ en ce qui concerne les conducteurs auxiliaires de l'une et l'autre rangées respectivement et appartenant aux réglettes 3 et 4 de conducteurs auxiliaires, un seul conducteur auxiliaire de chacune de ces deux rangées étant visible dans les figures 1 et 2. Ces deux rangées des conducteurs auxiliaires $C_{11}$ et $C_{12}$ des réglettes 3 et 4 s'étendent de part et d'autre de l'ensemble des huit réglettes 7 au-delà des pièces cales 5 et 6, respectivement.

Les conducteurs auxiliaires $C_{11}$ et $C_{12}$ ont des premières extrémités $C_{11a}$ et $C_{12a}$ alignées sur deux lignes respectivement au niveau du haut de la tête d'impression c'est-à-dire au niveau des deux lignes que composent les premières extrémités des conducteurs $C_1$ à $C_8$ ou stylets. Les premières extrémités des conducteurs auxiliaires sont constituées chacune d'une partie terminale plate du conducteur auxiliaire concerné, s'étendant sensiblement perpendiculairement au plan XX' et ayant l'une de ses deux faces plates, tournée vers l'extérieur de la tête et destinée à être en contact avec le papier diélectrique lors du fonctionnement de la tête, dans le même plan que les bords en biseau qui constituent les premières extrémités des conducteurs $C_1$ à $C_8$. Ces premières extrémités des conducteurs auxiliaires, qui forment ce que l'on appelle souvent dans la technique des têtes d'impression électrostatique des contre-électrodes, les stylets étant souvent appelés également électrodes, sont disposées dans chaque ligne qu'elles composent à pas régulier, égal dans l'exemple chiffré à 3 mm, leurs dimensions étant, en ce qui concerne la face destinée à être en contact avec le papier, sensiblement, 2,5 mm×4 mm.

Les deux lignes de contre-électrodes sont très proches des deux lignes de stylets respectivement, la distance séparant chaque ligne de contre-électrodes de la ligne de stylets la plus proche étant ici de l'ordre de 200 $\mu$m et les contre-électrodes de chaque ligne sont disposées longitudinalement au même niveau que les contre-électrodes de l'autre ligne, respectivement.

Dans chacune des deux rangées, qui sont symétriques par rapport au plan XX', les conducteurs auxiliaires sont parallèles les uns aux autres. Ils présentent chacun une pliure ici selon un angle voisin de 110°, au niveau de leurs premières extrémités et ont des secondes extrémités, situées dans la tête plus bas que celles des conducteurs $C_1$ à $C_8$, cambrées pour former chacune une borne de connexion.

Le soutien mécanique des deux rangées de conducteurs auxiliaires $C_{11}$ et $C_{12}$ qui, dans l'exemple chiffré considéré, en comprennent chacune 73, est assuré par deux pièces de support individuelles en matériau isolant, 30 et 40 respectivement, qui forment également chacune une sorte de gaine longitudinale pour la rangée de conducteurs auxiliaires concernée avec laquelle elle forme la réglette 3 ou 4 de conducteurs auxiliaires et qui sont assemblées à l'ensemble des réglettes 7 par l'intermédiaire des deux pièces cales 5 et 6 dans lesquelles ces deux pièces de support 30 et 40 sont respectivement emboîtées.

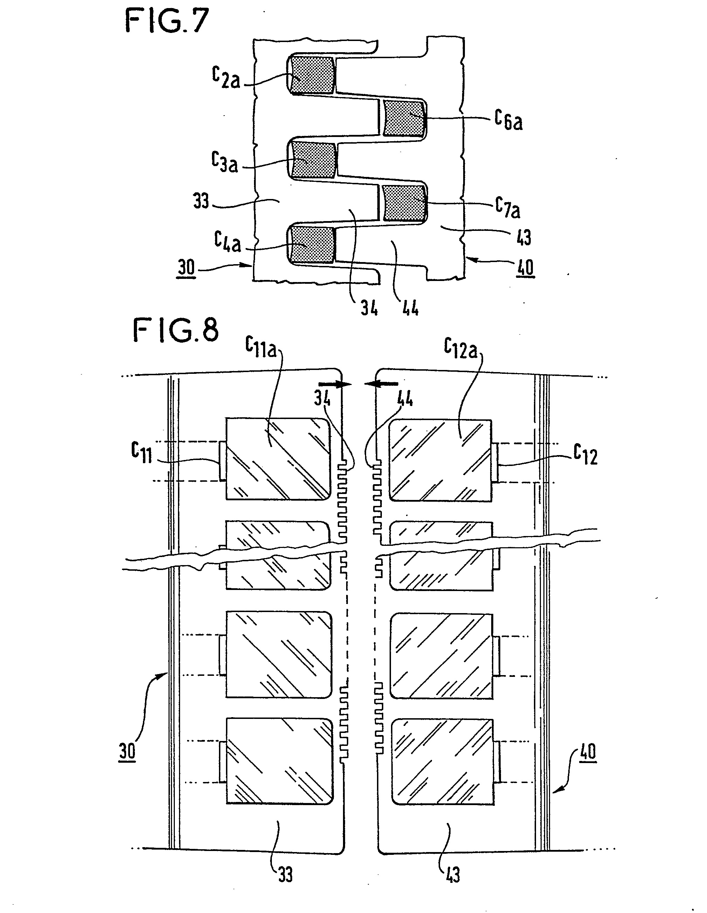

En vue des positionnements longitudinaux relatifs corrects des rangées de conducteurs $C_1$ à $C_8$ et des rangées de conducteurs auxiliaires $C_{11}$ et $C_{12}$ ainsi que des écartements corrects entre lignes de stylets et entre ligne de stylets et ligne de contre-électrodes, ainsi qu'il apparaîtra plus clairement ci-après en regard des figures 7 et 8, les deux pièces de support 30 et 40 qui sont identiques, présentent, à leurs parties supérieures dans la tête, à la surface supérieure de chacune desquelles affleurent les contre-électrodes composant l'une des lignes, respectivement deux dentures longitudinales telles que 44 partiellement rentrées l'une dans l'autre. Dans chacune de ces dentures, les dents, chacune d'épaisseur très légèrement inférieure à la largeur d'un stylet, c'est-à-dire à 125 $\mu$m, sont disposées à pas régulier égal au pas des stylets le long d'une ligne, c'est-à-dire 250 $\mu$m, et les espaces entre dents sont traversés respectivement par les conducteurs $C_1$ à $C_4$ en ce qui concerne la denture du support 30 et $C_5$ à $C_8$ en ce qui concerne la denture du support 40, chacun de ces conducteurs se trouvant en contact ou quasiment en contact d'un côté, au niveau du haut de la tête, avec le fond de la denture considérée, entre deux dents de celle-ci, ce fond étant incliné de façon adéquate par rapport au plan XX', et du côté opposé au précédent, à très faible distance du haut de la tête, avec une dent de l'autre denture, le bord supérieure de chacune des dents desdites dentures s'abaissant avantageusement légèrement en raison de l'existence des inclinaisons relatives des rangées de conducteurs d'un même groupe jusqu'aux bords de ces conducteurs destinés à être en contact avec le papier. On notera que ces deux dentures assurent en outre un bon isolement électrique entre les conducteurs $C_1$ à $C_8$ dans la partie supérieure de la tête d'impression, c'est-à-dire là où ces conducteurs sont les plus rapprochés les uns des autres.

C'est entre les deux pièces de support des réglettes 3 et 4 qu'est enfichée, au voisinage de leurs bords inférieurs, la carte support de circuit imprimé 9, pincée au voisinage de chacun de ses bords longitudinaux entre les deuxièmes extrémités cambrées des conducteurs auxiliaires de l'une des rangées, qui débouchent dans une ouverture longitudinale que comporte à ce niveau la pièce de support de cette rangée, et le bord inférieur de cette ouverture.

On notera que la carte 9 ainsi disposée forme avec les deux réglettes 3 et 4 de conducteurs auxiliaires une sorte d'ensemble cylindrique creux à section droite approximativement trapézoïdale, la grande base du trapèze correspondant à la carte 9 et la petite base aux parties supérieures des pièces 30 et 40 comportant les dentures, et à l'intérieur duquel s'épanouissent, entre les pièces cales 5 et 6, les huit réglettes 7 avec leur huit cartes associées 8.

Cette carte 9 porte un circuit d'adressage des conducteurs auxiliaires $C_{11}$ et $C_{12}$ c'est-à-dire des contre-électrodes. Les entrées (non visibles dans ces figures) de ce circuit d'adressage sont ramenées sur un connecteur (non visible dans ces figures) soudé à la carte au voisinage d'un bord latéral de cette carte situé à ladite première extrémité de la tête pour constituer des entrées de la tête, et les sorties (non représentées), en nombre égal à celui des conducteurs auxiliaires, sont réparties, sur une même face de la carte, celle tournée vers l'intérieur de l'ensemble cylindrique creux précité, sur deux lignes au voisinage des deux bords longitudinaux de la carte respectivement, ces sorties, constituées par des extrémités de pistes conductrices et disposées dans chaque ligne au pas des deuxièmes extrémités des conducteurs auxiliaires de chaque rangée, soit 3 mm, étant connectées chacune à une de ces deuxièmes extrémités, par simple contact grâce à la forme cambrée adaptée à cet effet de celles-ci. Ce circuit d'adressage, dont le schéma est précisé plus loin, comporte des composants tels que des diodes et des résistances; ces composants, dont on a représenté (mais non référence) un exemplaire de chaque dans la figure 1, sont avantageusement rassemblés sur une seule face de la carte 9, opposée à celle portant les sorties du circuit.

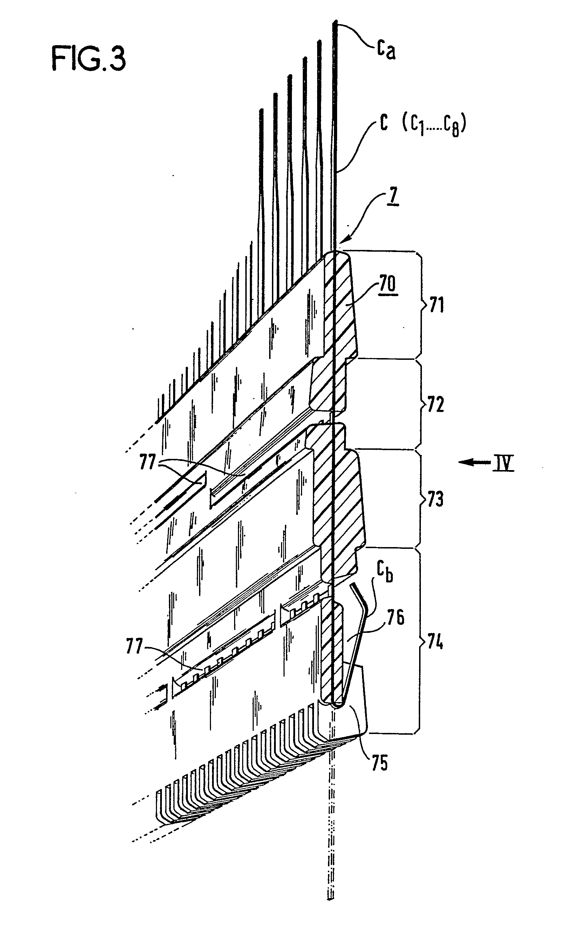

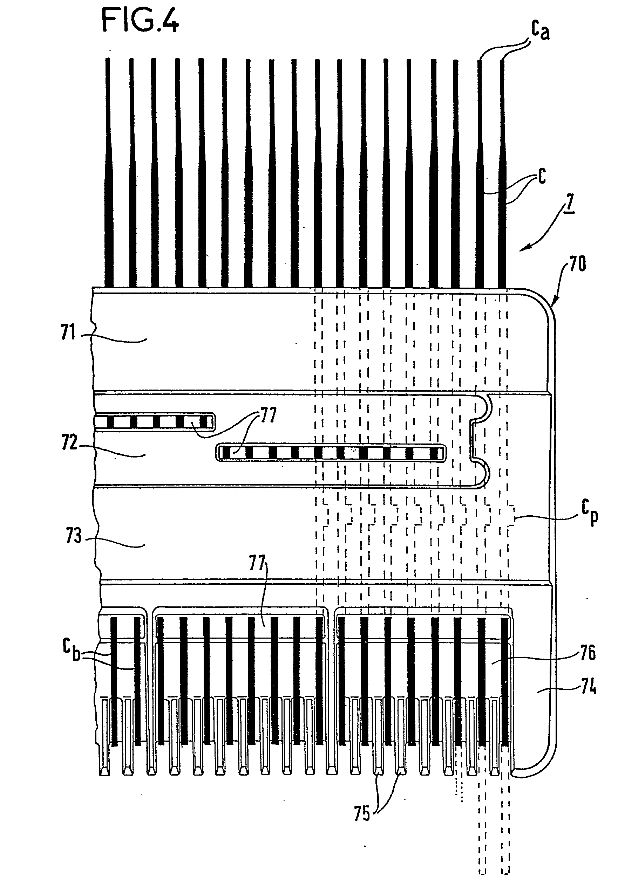

La description de la tête 100 des figures 1 et 2, est complétée par celle des figures 3 et 4 qui illustrent une des réglettes 7 formée de la rangée de conducteurs $C_1$ ou $C_2$ ... ou $C_8$, ici désignés par la lettre C, maintenus dans leur pièce de support 70. Dans les figures 3 et 4 la réglette est représentée isolée c'est-à-dire avant montage de la tête. Les étapes successives d'obtention d'une telle réglette ne sont pas schématisées, elles sont aisées à comprendre et sont donc simplement expliquées ci-après.

La réglette 7 peut être obtenue par surmoulage plastique d'une grille découpée (par exemple sous presse) dans une plaque métallique d'épaisseur très légèrement inférieure à la largeur d'une ligne de balayage. Les barreaux de cette grille, disposés à pas régulier égal à huit fois le pas de définition des points d'image le long d'une ligne de balayage, c'est-à-dire égal à 1 mm, et de largeur par exemple de l'ordre de 300 µm, constituent les conducteurs C dont les premières extrémités qui formeront les stylets, comme les secondes extrémités opposées, sont pendant l'étape de surmoulage réunies entre elles selon l'un et l'autre des bords longitudinaux de la grille. Après surmoulage, la dissociation des barreaux, par découpe des deux bords longitudinaux de la grille, permet les mises en forme convenable des premières et secondes extrémités alors indépendantes des conducteurs successifs C pour aboutir à la réglette 7 représentée.

La profilé donné à la pièce support 70 et les mises en forme des extrémités des conducteurs C sont précisés en regard de ces figures 3 et 4.

Les premières extrémités des conducteurs $C_a$

sont simplement rectifiées à la largeur souhaitée des stylets, soit 125 µm. Les secondes extrémités des conducteurs sont repliées d'un même côté du support 70 et cambrées pour former des bornes de contact ici désignées par $C_b$ du type lame à ressort.

Pour expliquer le profilé donné à la pièce support 70, celle-ci a été divisée, selon la hauteur de la pièce 70, en quatre parties désignées par 71, 72, 73 et 74 respectivement, dont les faces sont, pour chacune d'elles, l'une parallèle aux conducteurs C et l'autre inclinée sensiblement à 5 degrés sur les conducteurs C. Les parties 71 à 73 sont d'épaisseur croissant sensiblement régulièrement et définissent sur l'une des deux faces complémentaires de la pièce 70, deux zones longitudinales parallèles aux conducteurs situées en retrait et de part et d'autre d'une troisième zone inclinée sur les conducteurs et, sur l'autre face de la pièce 70, une zone parallèle aux conducteurs située en retrait de et entre deux zones inclinées, tandis que la quatrième partie 74 définit sur chacune des faces de la pièce 70 une quatrième zone (inclinée ou parallèle aux conducteurs) analogue à la zone adjacente définie par la partie 73.

La partie 74, portant les bornes de contact $C_b$ présente, en outre, une échancrure longitudinale 76 laissant libres les bornes de contact $C_b$, tandis que sa portion terminale forme un peigne 75 dont les dents respectives issues du surmoulage de la pièce 70 séparent les barreaux de la grille initiale ou secondes extrémités des conducteurs C (non encore repliées et indiquées en pointillés) et permettent donc de les replier pour former les bornes $C_b$.

On note, en outre, que la pièce 70 obtenue présente, en outre des lumières longitudinales interrompues et/ou décalées telles que 77, ces lumières répondent à un problème de bonne tenue de la grille initiale pendant l'opération de surmoulage. On note également en regard de la figure 4, que les conducteurs C présentent dans leur portions médiane des ergots formant pattes $C_p$ (issus de la découpe d'obtention de la grille initiale), ces pattes assurant un meilleur maintien des conducteurs C dans la pièce 70.

Ainsi qu'il apparait en regard des figures 3 et 4 et de la figure 1 dans laquelle les différentes parties de l'une ou l'autre des réglettes montées n'ont pas été identifiées, la zone inclinée de la partie 73 de l'une des pièces de support 70 constitue la zone d'appui pour la pièce de support la suivant dans l'assemblage des réglettes de conducteurs allant de la pièce cale 5 à la pièce cale 6 on pour la pièce cale 6 tandis que la zone parallèle aux conducteurs de cette même partie 73 de cette pièce de support constitue la zone d'appui pour la pièce de support précédente dans l'assemblage ou la pièce cale 5. En ce qui concerne les bornes $C_b$, elles viennent en contact respectivement avec des pistes imprimées (non représentées) de la carte 8 associée, la zone inclinée et échancrée de la partie ·

74 constituant une zone d'appui sur la carte 8 associée tout en permettant le contact entre les bornes $C_b$ et les pistes imprimées, la zone parallèle aux conducteurs de cette même partie 74 venant en appui contre l'autre face de la carte associée à la réglette précédente ou contre la pièce cale 5.

Dans l'assemblage des réglettes les zones inclinées des parties 71 et 72 de l'une des réglettes s'imbriquent dans les zones parallèles des mêmes parties des réglettes adjacentes, respectivement. On notera, enfin, que de légères pliures présentées par les conducteurs de certaines réglettes dans la tête montée, en vue de la convergence des conducteurs sur deux lignes au lieu d'une leur sont imprimées lors de l'assemblage de la tête; les premières extrémités en biseau des conducteurs des différentes réglettes ne seront formées qu'une fois la tête montée.

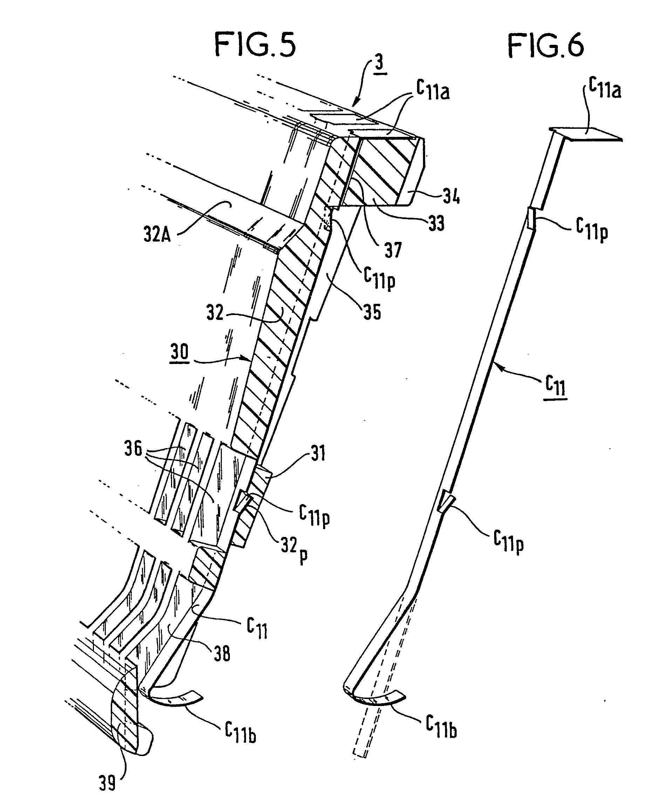

La description de la tête d'impression illustrée dans les figures 1 et 2 est complétée également par la description de l'une des réglettes identiques 3 et 4 de conducteurs auxiliaires, faite en regard de la figure 5 qui représente la réglette 3 et de la figure 6 qui représente en perspective l'un des conducteurs $C_{11}$ qu'elle porte, et de l'assemblage de ces deux réglettes 3 et 4 dans la tête, fait en regard des figures 7 et 8 dans lesquelles à échelle très agrandie on a illustré leurs parties supérieures.

La pièce de support 30 appartenant à la réglette 3 peut être obtenue par surmoulage, elle est de forme adaptée à sa fonction de maintien de la rangée de conducteurs auxiliaires $C_{11}$ qu'elle porte et qui est disposée d'un côté ou de l'autre de l'ensemble des réglettes de 7 conducteurs en associant les premières extrémités $C_{11a}$ de ses conducteurs qui définissent l'une des deux lignes de contre-électrodes à l'une des lignes de stylets.

En regard des figures 1 ou 2, et 5, 7 et 8 on voit que la pièce 30 présente une partie principale allongée, dite aussi corps principal 32 venant recouvrir d'un côté l'ensemble des réglettes montées et associées de ce côté à la pièce cale 5, en maintenant sa rangée de conducteurs auxiliaires $C_{11}$ et présente un rebord 33 venant recouvrir partiellement la partie supérieure de la tête en venant positionner relativement la ligne de contre-électrodes $C_{11a}$ et l'une des lignes de stylets.

Le corps principal 32 de la pièce 30 a l'une de ses faces longitudinales, celle qui sera tournée vers l'ensemble des réglettes 7 et dite première face, cloisonnée selon sa hauteur par une pluralité de nervures 35 interrompues sur une portion longitudinale intermédiaire par une saillie longitudinale 31. Ces nervures 35 définissent entre elles des logements individuels pour les conducteurs auxiliaires $C_{11}$, le fond des logements définis venant communiquer respectivement, de part et d'autre de la saillie 31 et à l'épaisseur des conducteurs $C_{11}$ près, avec le fond d'évidements 36 formés sur la face longitudinale opposée, dite deuxième face du corps principal 32, sur cette portion intermédiaire. Les arêtes de ces nervures 35 constituent, en outre, avec la saillie longitudinale 31 des zones d'appui et d'emboîtement pour la réglette 3 sur la pièce cale 5 contre laquelle elle est montée.

La partie longitudinale terminale du corps principal 32, opposée au rebord 33, forme un peigne 38 dont les dents prolongent les nervures respectives de la première face longitudinale et sont réunies sur le bord longitudinal attenant qui forme une sorte de talon 39 échancré longitudinalement du côté de ladite première face longitudinale. C'est sur la partie externe de ce talon 39 que vient presser le pied de serrage 11 du demi-boîtier 1, lorsque la tête est montée (figure 1), tandis que l'autre pied de serrage 12 de ce demiboîtier 1 vient presser une zone longitudinale inclinée 32A présentée par la deuxième face du corps principal 32, du côté du rebord 33.

Le rebord 33 a sensiblement la forme d'une barre longitudinale incliné à environ 110° sur le corps principal 32 et s'étendant du côté des nervures 35 en les interrompant. Les logements définis entre nervures débouchent sur la face supérieur du rebord 33 sur laquelle affleurent alignées les premières extrémités $C_{11a}$ des conducteurs auxiliaires $C_{11}$, par des fentes 37 alignées respectivement avec ces logements, prévues entre le corps principal 32 et le rebord, ces fentes 37 permettant l'introduction individuelle des conducteurs $C_{11}$ dans leur pièce de support 30 pour leur maintien et positionnement.

Ces conducteurs auxiliaires, tel que celui illustré dans les figures 5 et 6, peuvent être obtenus par découpe d'une plaque métallique rectangulaire. Chaque conducteur auxiliaire est constitué par une lame métallique étroite ayant une de ses extrémités $C_{11a}$ plus large, de dimensions voulues pour constituer une contre électrode, et pliée à environ 110 degrés. Ce conducteur auxiliaire avant montage dans sa pièce de support 30, les conducteurs reçus par la pièce support étant introduits individuellement, est, exception faite de son extrémité large, initialement droit ainsi que schématisé en pointillé dans la figure 6 pour la deuxième extrémité. Il présente deux ergots ou pattes tels que $C_{11p}$, obtenus par découpes partielles dans la lame métallique et pliures de ces découpes effectuées en correspondance, de niveau et de forme, à des décrochements tels que $32_p$ prévus dans le corps principal 32 de la pièce 30, venant assurer un blocage du conducteur auxiliaire monté dans sa pièce support, sans pour autant, grâce à leur déformation élastique, gêner l'insertion de ce conducteur, les pliures étant, ici à environ 30°, effectuées d'un côté et de l'autre de la lame. Ainsi chaque conducteur $C_{11}$, inséré par sa deuxième extrémité alors droite dans l'une des fentes est glissé dans les fentes et logements successifs alignés définis sur la hauteur de la pièce support 30 jusqu'à appui de sa première extrémité large, ou contre-électrodes, $C_{11a}$ contre la surface supérieure du rebord 33. La rangée de conducteurs auxiliaires étant montée dans sa pièce support, leurs secondes extrémités seront cambrées pour venir former autant de bornes de contact, désignées par $C_{11b}$, destinées à venir ainsi qu'il apparait dans la figure 1 en appui sur la carte imprimée 9 dont un bord longitudinal est pincé entre la rangée de bornes $C_{11b}$ et le bord intérieur échancré du talon 39.

On voit, en outre en regard de la figure 5 et des figures 7 et 8, essentiellement, que le rebord 33 de la pièce 30, ou 43 pour la pièce 40, se termine en formant sur sa face frontale une denture 34 pour la pièce 30, ou 44 pour la pièce 40. Les dents de l'une des dentures viennent s'imbriquer dans les espaces entre dents de l'autre denture, et réciproquement, pour déterminer entre les fonds et sommets respectivement en regard des emplacements précis des stylets respectifs. Les stylets, formés par les premières extrémités $C_{1a}$ à $C_{8a}$ des conducteurs $C_1$ à $C_8$ respectivement, sont ainsi bloqués chacun d'une part entre les faces latérales en regard appartenant respectivement à deux dents successives de l'une des dentures 34 et 44 et d'autre par entre le fond de cette denture, au niveau de ces deux dents successives, et la face frontale de la dent de l'autre denture, imbriquée dans l'intervalle entre ces deux dents. Dans la figure 7, on a ainsi représenté les premières extrémités $C_{2a}$ à $C_{4a}$ et $C_{6a}$ à $C_{7a}$ des conducteurs appartenant chacun à des rangées différentes, bloquées vers le haut de la tête entre ces deux dentures, les conducteurs ainsi répartis à pas régulier et bloqués sur deux lignes auxquelles correspondent respectivement les deux groupes de conducteurs étant avantageusement ordonnés pour optimiser l'isolement entre conducteurs, de rangées différentes mais voisins dans ces deux lignes; c'est ainsi que les stylets voisins tels que $C_3$ et $C_6$ ou $C_4$ et $C_7$, n'appartiennent pas aux deux rangées de conducteurs les plus proches l'une de l'autre dans l'ensemble des deux groupes formés.

On notera, en outre, en regard de la figure 8 dans laquelle les pièces 30 et 40, on été illustrées volontairement écartées l'une de l'autre pour la clarté du dessin, les stylets n'étant donc pas positionnés dans les dentures distantes, que pour chacune de ces pièces, la denture 34 ou 44 qu'elle présente débute à mi-largeur de la première contre-électrode $C_{11a}$ ou $C_{12a}$ de la ligne des contre-électrodes supportées par cette pièce et s'arrête à mi-largeur de la dernière contre-électrode de cette ligne et qu'au pas régulieur (de 3 mm) auquel sont disposées les contre-électrodes de la ligne, s'étendent douze dents et douze espaces entre dents.

On obtient ainsi, grâce aux deux pièces de support 30 et 40 mises relativement en place, les deux lignes de stylets (figure 7) et les deux lignes de contre-électrodes correctement positionnées les unes par rapport aux autres avec un bon isolement électrique entre stylets, entre stylets et contre-électrodes ainsi en outre qu'entre contre-électrodes.

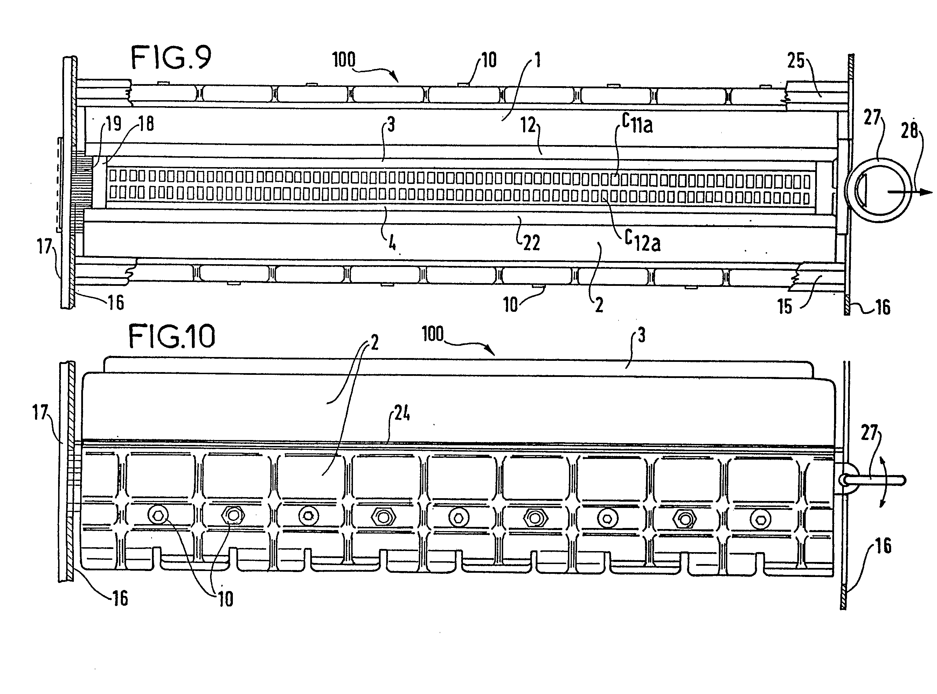

Certains éléments de la tête 100 décrite ci-avant seront précisés en regard des figures 9 à 11.

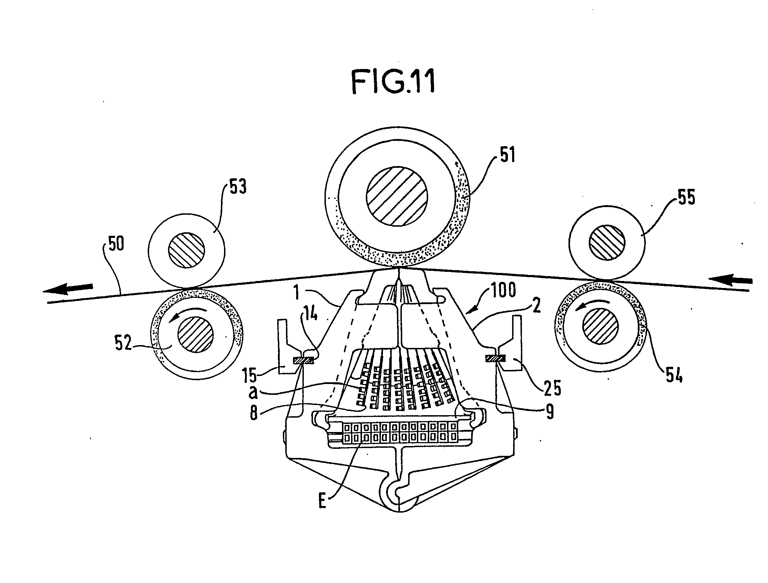

Dans les figures 9 et 10 on voit, en outre que la tête d'impression 100 est associée à une carte de circuit imprimé supplémentaire 17 portant un circuit de commande de cette tête. Cette cette de circuit imprimé 17 est disposée contre le châssis 16 et à l'extérieur de celui-ci du côté de l'une des extrémités de la tête, dite ci-avant première extrémité de la tête. Le circuit de commande porté par cette carte 17 est relié au circuit porté par la carte 9, non visible dans ces figures, d'adressage des conducteurs auxiliaires $C_{11}$ et $C_{12}$, au moyen du connecteur 18 associé à la carte 9, dans lequel sont enfichées des broches de connexion 19 soudées à ladite carte supplémentaire 17 sur les sorties du circuit de commande qu'elle porte.

On notera, bien que non visibles dans ces figures, que des connecteurs associés aux cartes telles que 8, sont également reliés au circuit de commande de la carte 17, de façon analogue, par des broches de connexion.

Enfin, on voit à la deuxième extrémité de la tête, un anneau 27 débordant du châssis, qui est relié mécaniquement aux cartes 8 et à la carte 9 de manière à permettre la déconnexion de la tête de son circuit de commande porté par la carte 17, c'est-à-dire le désenfichage des broches précitées, par simple traction exercée sur cet anneau et symbolisé par une flèche 28.

On notera, en regard de la figure 9, que pour la clarté du dessin, les deux lignes de stylets disposées entre les lignes de contre-électrodes ainsi que les dentures des pièces support dans les réglettes 3 et 4 de conducteurs n'ont volontairement pas été représentées.

Enfin, dans la figure 11, on a illustré la tête d'impression 100, vue du côté de sa première extrémité montée sur ses supports de guidage 15 et 25 et associée au papier diélectrique 50.

On y voit notamment, sur cette première extrémité les différentes entrées de la tête, c'est-à-dire six entrées a formées sur le connecteur soudé en bout de chaque carte de circuit imprimé 8 et un ensemble de vingt-quatre entrées E, dont vingt trois seront seulement utilisées dans la tête, formées sur le connecteur soudé en bout de la carte 9.

On y soit aussi, le papier diélectrique 50 appuyé contre les stylets et les contre-électrodes de la tête par un rouleau 51 tandis qu'il est engagé pour son entraînement, de part et d'autre de la tête et de ce rouleau 51, entre un premier rouleau d'entraînement 52 et un premier rouleau suiveur 53 et entre un second rouleau d'entraînement 54 et un second rouleau suiveur 55. Bien entendu d'autres équipements tels une station de développement d'image latente et une centrale de fixation d'image développée, non représentés ni décrits ici car

**0 059 920**

sans rapport direct avec l'invention, seront en pratique disposés sur le trajet du papier 50 entre l'ensemble tête-rouleau 51 et la paire rouleau d'entraînement-rouleau suiveur disposée en aval de cet ensemble dans le sens d'entraînement du papier.

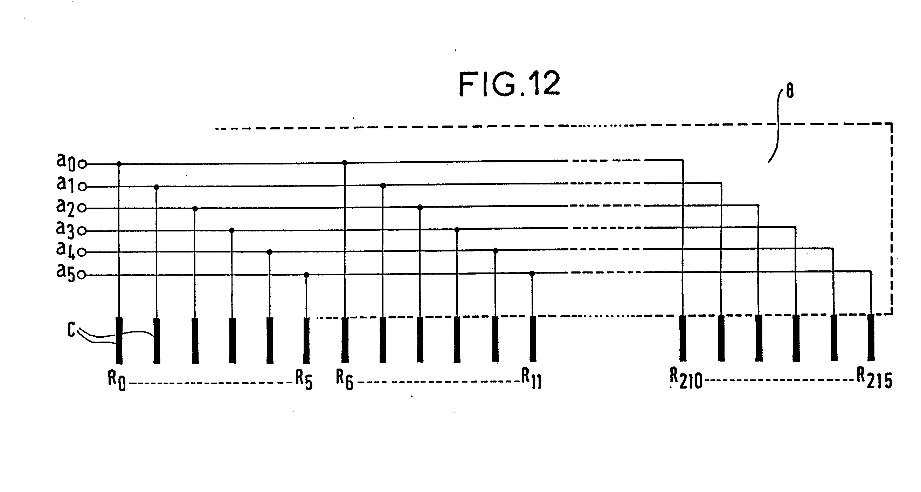

Dans la figure 12, on a donné un schéma électrique du circuit de connexion porté par chaque carte 8 associée aux réglettes 7 de conducteurs C ($C_1$ à $C_8$) également représentés et dont les rangs 0 à 215 dans leur rangée ont été désignés par $R_0$, $R_1$, ... $R_{215}$, assurant les liaisons de ces conducteurs aux entrées a de la tête formées sur le connecteur disposé en bout de la carte, ces entrées ici au nombre de six étant référencées individuellement par $a_0$, $a_1$, ... $a_5$.

Ce schéma électrique assure la connexion des conducteurs C ayant des rangs égaux modulo six dans leur rangée à une même entrée, les conducteurs de rangs égaux à 0, 1, ... et 5 modulo 6 étant ainsi reliés respectivement aux entrées $a_0$, $a_1$, $a_2$, ... $a_5$. Pour leur alimentation électrique, les conducteurs C de chaque rangée sont donc répartis en six ensembles chacun de trente-six conducteurs reliés en commun à une même entrée, les conducteurs de ces six ensembles respectivement étant de rangs égaux à 0, 1, ... et 5 modulo 6 dans leur rangée.

Bien que non représenté, on comprendra que pour l'alimentation électrique des conducteurs $C_1$ à $C_8$ des huit rangées, la tête d'impression comporte donc ici quarante huit entrées, qui seront désignées $a_{0,1}$ à $a_{5,1}$ pour les conducteurs $C_1$, $a_{0,2}$ à $a_{5,2}$ pour les conducteurs $C_2$, ... et $a_{0,8}$ à $a_{5,8}$ pour les conducteurs $C_8$, auxquelles sont connectées en commun les trente-six conducteurs des quarante huit ensembles en lesquels sont répartis les conducteurs des huit rangées respectivement. Il s'ensuit que les stylets de la tête d'impression ayant des rangs égaux modulo 48 dans la zone des stylets, c'est-à-dire dans la zone définie par l'ensemble des deux lignes de stylets, sont reliés à une même entrée de la tête.

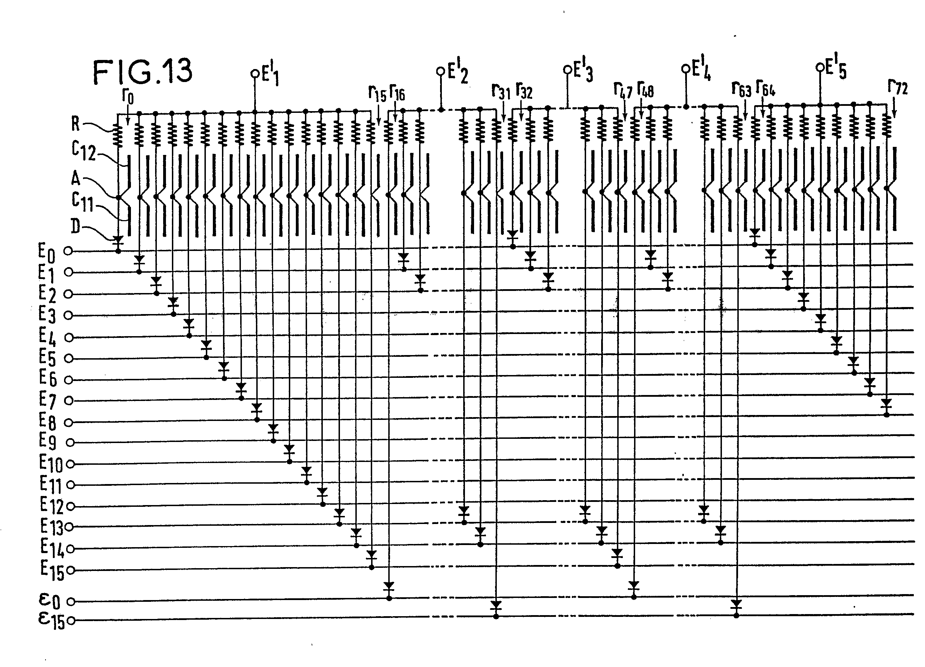

Dans la figure 13, on a donné un schéma électrique du circuit d'adressage des conducteurs auxiliaires $C_{11}$ et $C_{12}$ c'est-à-dire des contre-électrodes, porté par la carte 9, et représenté ces conducteurs $C_{11}$ et $C_{12}$.

Ainsi qu'il apparaît dans ce schéma, les conducteurs auxiliaires $C_{11}$ et $C_{12}$ se répartissent, pour leur alimentation électrique, en quatre ensembles de trente-deux conducteurs auxiliaires plus un ensemble de dix-huit conducteurs auxiliaires, chaque ensemble étant composé pour moitié de conducteurs $C_{11}$ de rangs successifs dans leur rangée et pour moitié des conducteurs $C_{12}$ respectivement de mêmes rangs dans leur propre rangée que les conducteurs $C_{11}$ de l'ensemble considéré dans la leur, l'ensemble de dix-huit conducteurs auxiliaires étant composé des neuf derniers conducteurs auxiliaires de chaque rangée. On qualifiera ci-après de premier, deuxième, troisième, quatrième et cinquième, les ensembles constitués des conducteurs $C_{11}$ et $C_{12}$ de rangs 0 à 15, 16 à 31, 32 à 47, 48 à 63 et 64 à 72 respectivement dans leurs rangées respectives, les rangs des conducteurs auxiliaires en limite de chaque ensemble apparaissant désignés par la lettre r accompagnée du chiffre le définissant, dans cette figure.

Les conducteurs auxiliaires $C_{11}$ et $C_{12}$ de même rang sont reliés à un même point tel que A auquel on attribue pour la suite ce même rang. A chaque point A sont associées une résistance telle que R et une diode telle que D. Pour chaque ensemble, les points A, qui sont donc au nombre de seize en ce qui concerne le premier, deuxième, troisième ou quatrième ensemble et au nombre de neuf en ce qui concerne le cinquième, sont reliés d'une part, chacun à travers la résistance qui lui est associée à une même entrée du circuit d'adressage, c'est-à-dire à une même entrée de la tête, référencée $E'_1$, $E'_2$, ... ou $E'_5$ selon que l'ensemble considéré est le premier, deuxième, ... ou cinquième, et d'autre part, chacun à travers la diode qui lui est associée, à une entrée différente prise parmi dix-huit autres entrées du circuit d'adressage et donc de la tête, référencées $E_0$ à $E_{15}$, $\varepsilon_0$ et $\varepsilon_{15}$. En ce qui concerne les premier, troisième et cinquième ensembles, les points A ayant des rangs égaux modulo 16 sont reliés, à travers les diodes D qui leur sont respectivement associées, à l'entrée $E_0$, $E_1$, ... ou $E_{15}$ selon que leurs rangs sont égaux à 0, 1, ... 15 modulo 16. En ce qui concerne les deuxième et quatrième ensembles, les points A de rangs égaux à 1, 2, ... et 14 modulo 16 sont, comme ceux de mêmes rangs des trois autres ensembles, reliés, à travers les diodes D qui leur sont respectivement associées, aux entrées $E_1$ à $E_{14}$, respectivement, les points A de rangs égaux à 0 modulo 16 (c'est-à-dire les deux points de rangs respectifs $r_{16}$ et $r_{48}$) et ceux de rangs égaux à 15 modulo 16 (c'est-à-dire les deux points de rangs respectifs $r_{31}$ et $r_{63}$) étant par contre reliés, toujours à travers les diodes D qui leur sont respectivement associées, à l'entrée $\varepsilon_0$ et à l'entrée $\varepsilon_{15}$ respectivement. La raison de l'existence des deux entrées en quelque sorte supplémentaires $\varepsilon_0$ et $\varepsilon_{15}$ apparaîtra plus loin. Chacune des diodes D est ici passante dans le sens point A entrée.

Les signaux reçus par les diverses entrées de la tête au cours du fonctionnement de celle-ci et qui sont élaborés par le circuit de commande mentionné en regard de la figure 9 seront précisés plus loin lors de la description de ce fonctionnement.

En fonctionnement, le papier défile, par exemple pas à pas, contre les stylets et contre-électrodes de la tête d'impression sous l'action des deux rouleaux d'entraînement ainsi que schématisé par deux flèches dans la figure 11 tandis que le circuit de commande mentionné en regard de la figure 9 (la carte de circuit imprimé équipé de ce circuit de commande n'a pas éta représenté dans la figure 11 afin de ne pas cacher certains éléments de la tête) délivre à la tête ses signaux d'entrée.

A la suite de chaque avance d'un pas du papier, les entrées $a_{0,1}, \ldots a_{0,4}, a_{1,1} \ldots, a_{1,4}, \ldots a_{5,1}, \ldots$ et $a_{5,4}$ reçoivent de façon séquentielle des données cadencées par un signal d'horloge de période désignée par T, définissant les points d'image de rangs d'une parité donnée, ici de rangs pairs, d'une ligne de balayage, dite première, tandis que les entrées $a_{0,5}, \ldots, a_{0,8}, a_{1,5}, \ldots a_{1,8}, \ldots, a_{5,5}, \ldots$ et $a_{5,8}$ reçoivent de façon séquentielle des données cadencées par le même signal d'horloge, définissant les points d'image de rangs de l'autre parité, c'est-à-dire de rangs impairs, d'une seconde ligne de balayage suivant ladite première à deux pas ligne, la durée de ces opérations étant ainsi de 864 périodes T. Chacune de ces données se traduit par exemple par une tension de niveau 300 V ou 0 V selon que l'inscription du point d'image qu'elle définit correspond à un apport de charge sur le papier ou à l'absence d'un tel apport, une différence de potentiel d'au moins 600 V entre un stylet et la contre-électrode en regard ou, si ce stylet se trouve en regard d'un intervalle entre deux contre-électrodes, chacune de ces deux contre-électrodes étant par exemple nécessaire pour provoquer un apport de charge sur la papier, cet apport de charge se produisant au niveau du stylet.

Pendant la première période T (desdites 864 périodes T), les stylets de rangs égaux à 0 modulo 48 dans la zone des stylets sont donc tous au potentiel définissant le point d'image de rang 0 de ladite première ligne de balayage tandis que les stylets de rangs égaux à 1 modulo 48 dans la zone des stylets sont tous au potentiel définissant le point de rang 1 de ladite seconde ligne de balayage, tous les autres stylets étant à 0 V; pendant la seconde période T, les stylets de rangs égaux à 2 modulo 48 dans la zone des stylets sont tous au potentiel définissant le point d'image de rang 2 de ladite première ligne de balayage tandis que les stylets de rangs égaux à modulo 48 dans cette zone sont tous au potentiel définissant le point de rang 3 de ladite seconde ligne de balayage, tous les autres stylets étant à 0 V; etc... jusqu'à la 48ème période T incluse; à la 49ème période T un nouveau cycle recommence et le processus continue jusqu'à la 864ème période T à la suite de laquelle le papier avance à nouveau d'un pas.

Pendant ce temps, une tension de 300 V est appliquée successivement aux entrées $E'_1$ à $E'_5$, dans cet ordre, de telle façon que chacune de ces entrées se trouve seule à 300 V, les quatre autres étant à 0 V, pendant un intervalle de temps de 180 (=15×12) périodes T en ce qui concerne les entrées $E'_1$ à $E'_4$ et de 96 (=8×12) périodes T en ce qui concerne l'entrée $E'_5$, et que ces intervalles de temps, qui seront qualifiés de premier à cinquième pour les entrées $E'_1$

à $E'_5$ respectivement, sont séparés par des intervalles de temps transitoires de 12 périodes T pendant lesquels deux de ces cinq entrées sont à 300 V et les trois autres à 0 V, à savoir un premier intervalle transistoire séparant ledit premier intervalle de temps dudit second et pendant lequel les entrées $E'_1$ et $E'_2$ sont à 300 V, un second intervalle transitoire séparant ledit second intervalle de temps dudit troisième et pendant lequel les deux entrées $E'_2$ et $E'_3$ sont à 300 V, un troisième intervalle transitoire séparant ledit troisième intervalle de temps dudit quatrième et pendant lequel les deux entrées $E'_3$ et $E'_4$ sont à 300 V, et un quatrième intervalle transitoire séparant ledit quatrième intervalle de temps dudit cinquième et pendant lequel les deux entrées $E'_4$ et $E'_5$ sont à 300 V.

Pendant chacun des premier, troisième et cinquième intervalles de temps, les entrées $\varepsilon_0$ et $\varepsilon_{15}$ sont maintenues constamment à 0 V tandis qu'une tension de 300 V est appliquée successivement sur simultanément deux des seize entrées $E_0$ à $E_{15}$ pendant que les quatorze autres sont à 0 V, de telle façon que pendant les douze premières périodes T de l'intervalle de temps considéré ce sont les entrées $E_0$ et $E_1$ qui sont à 300 V, pendant les douze périodes T suivantes ce sont les entrées $E_1$ et $E_2$ qui sont à 300 V, etc... jusqu'à la dernière tranche de douze périodes T de l'intervalle de temps considéré pendant lesquelles ce sont les entrées $E_{14}$ et $E_{15}$ qui sont à 300 V en ce qui concerne les premier et troisième intervalles et les entrées $E_7$ et $E_8$ en ce qui concerne le cinquième.

Pendant chacun des deuxième et quatrième intervalles de temps, le processus d'alimentation des entrées $E_0$ à $E_{15}$ et $\varepsilon_0$ et $\varepsilon_{15}$ est le même que pendant chacun des premier et troisième intervalles de temps à ceci près que les entrées $E_0$ à $\varepsilon_0$ d'une part et $E_{15}$ et $\varepsilon_{15}$ d'autre part sont interchangées.

Pendant chacun des premier et troisième intervalles de temps transitoires, une tension de 300 V est appliquée simultanément sur les entrées $E_{15}$ et $\varepsilon_0$ tandis que les entrées $E_0$ et $E_{14}$ et $\varepsilon_{15}$ sont à 0 V. Pendant chacun des deuxième et quatrième intervalles de temps transitoires, une tension de 300 V est appliquée simultanément sur les entrées $\varepsilon_{15}$ et $E_0$ tandis que les entrées $E_1$ à $E_{15}$ et $\varepsilon_0$ sont à 0 V.

Etant donné le sens selon lequel les diodes D sont passantes, chacune des contre-électrodes est soit au potentiel 300 V, on dit alors que la contre-électrode est adressée, soit à un potentiel positif très nettement inférieur ou à un potentiel nul, on dit alors que la contre-électrode n'est pas adressée, selon que les deux entrées auxquelles elle est reliée sont toutes les deux à 300 V ou non. Il s'ensuit que, pendant la première tranche de douze périodes T desdites 864 périodes T, seules sont adressées les deux contre-électrodes de rang 0 dans leurs lignes respectives et celles de rang 1, ceci alors que les stylets de rangs égaux à 0, 2, 4, ... et 22 modulo 48 dans la zone des stylets reçoivent successivement les données définissant les points d'image de rangs 0, 2, 4, ... et 22 de ladite première ligne de balayage et les stylets de rangs égaux à 1, 3, 5, ... et 23 modulo 48 dans la zone des stylets celles définissant les points d'image de rangs 1, 3, 5, ... et 23 de ladite deuxième ligne de balayage, ce qui entraîne l'inscription de ces vingt-quatre points d'image; pendant la seconde tranche de douze périodes T desdites 864 périodes T, seules sont adressées les deux contre-électrodes de rang 1 et celles de rang 2, ceci alors que les stylets de rangs égaux à 24, 26, ... et 46 modulo 48 dans la zone des stylets reçoivent successivement les données définissant les points d'image de rangs 24, 26, ... et 46 de ladite première ligne de balayage et les stylets de rangs égaux à 25, 27, ... et 47 modulo 48 dans la zone des stylets reçoivent les données définissant les points d'image de rangs 25, 27, ... et 47 de ladite seconde ligne de balayage, ce qui entraîne l'inscription de ces vingt-quatre autres points; etc... jusqu'à la soixante-douzième tranche de douze périodes T où sont seules adressées les deux contre-électrodes de rang 71 et celles de rang 72 alors que les stylets de rangs égaux à 24, 26, ... et 46 modulo 48 dans la zone des stylets reçoivent successivement les données définissant les points d'image de rangs 1704, 1706, ... et 1726 de ladite première ligne de balayage et les stylets de rangs égaux à 25, 27, ... et 47 modulo 48 dans la zone des stylets celles définissant les points d'image de rangs 1705, 1707, ... et 1727, ce qui entraîne l'inscription de ces vingt-quatre derniers points et termine l'inscription des points d'image de rangs pairs de ladite première ligne de balayage et les points d'image de rangs impairs de ladite seconde ligne de balayage, à la suite de quoi le papier progresse d'un pas pour une nouvelle opération d'inscription.

L'existence des deux entrées "supplémentaires" $\varepsilon_0$ et $\varepsilon_{15}$ permet d'adresser dans chaque ligne, simultanément deux contre-électrodes successives en limite de deux ensembles différents sans qu'aucune autre contre-électrode de l'un ou l'autre ensemble, si ce n'est les deux de mêmes rangs de l'autre ligne, ne soit également adressée.

Le circuit de commande de la tête, mentionné ci-avant, tout à fait du domaine de l'homme de l'art n'est pas décrit ici.

On a décrit un exemple particulier de réalisation de l'invention mais il est bien évident que l'on peut y apporter des modifications et/ou remplacer certains moyens par d'autres techniquement équivalents. Notamment et bien qu'en pratique cela soit moins intéressant, les rangées de conducteurs pourraient être maintenues mécaniquement par une pièce de support unique au lieu de l'être chacune par une pièce de support individuelle. Ces rangées de conducteurs pourraient aussi être agencées en plus de deux groupes.

De plus il est bien entendu que l'invention n'est pas limitée à l'exemple particulier d'application, à savoir l'impression électrostatique avec électrodes et contre-électrodes d'un même côté du papier diélectrique, dans le cadre duquel elle a été décrite. Une tête d'impression selon l'invention pourrait être utilisée par exemple pour l'impression d'image sur un support tel un papier électrochimique ou électrothermosensible; il suffirait alors de modifier les circuits d'alimentation électriques des conducteurs et des conducteurs auxiliaires en mettant ces derniers en permanence à la masse et en équipant par exemple les cartes de circuit imprimé associées aux rangées de conducteurs de circuits de conversion série/parallèle de données définissant des points d'image, ces données étant dans ce cas exprimées en basse tension ($\leqslant$30 V); en variante, les conducteurs auxiliaires pourraient être supprimés de la tête. Pour une utilisation avec un papier thermosensible, les conducteurs auxiliaires seraient inutiles, il faudrait par contre munir la première extrémité de chaque conducteur d'un élément résistif pour former un stylet adapté à ce type de papier, et doubler chaque rangée de conducteurs d'une rangée analogue par exemple supportée par la même pièce de support et dont les conducteurs seraient respectivement réunis à ceux de la première rangée considérée par les éléments résistifs portés par ces derniers conducteurs, et prévoir bien entendu des circuits de connexion pour ces nouvelles rangées de conducteurs, les circuits de connexion de deux rangées de conducteurs réunis étant par exemple portés par une même carte de circuit imprimé.

## Revendications

1. Tête d'impression comportant une pluralité de stylets formés respectivement par des premières extrémités de conducteurs électriques, ces premières extrémités étant disposées selon des lignes distinctes parallèles en étant positionnées à pas régulier sur chaque ligne et décalées d'une ligne à une autre et les conducteurs définissant autant de groupes que le lignes de stylets, ladite tête étant caractérisée en ce que lesdits conducteurs électriques (C) dans chacun des groupes ($G_1$, $G_2$) sont agencés en une pluralité de rangées distinctes s'épanouissant les unes par rapports aux autres, depuis la ligne de stylets concernée, sensiblement selon des demi-plans distincts, tout au moins au départ de cette ligne, et en ce que chacune des rangées comporte les conducteurs dont les stylets sur leur ligne ont des rangs égaux modulo le nombre de rangées du groupe auquel appartient cette rangée.

2. Tête d'impression selon la revendication 1 et dans lequel les conducteurs (C) de chacune desdites rangées sont partiellement noyés dans une pièce de support individuelle (70), en matériau isolant sur laquelle ils définissent les stylets (Ca) sur un premier bord longitudinal et des bornes de connexion (Cb) par leurs secondes extrémités sur le second bord longitudinal, et constituant avec leur pièce de support un ensemble appelé réglette (7) de conducteurs, caractérisée en ce que dans chacune des réglettes (7), ladite pièce de support (70) présente deux faces longitudinales ayant des formes complémentaires profilées pour permettre aux réglettes successivement adjacentes, d'au moins un même groupe de rangées de conducteurs, de venir, sur une partie de leur hauteur considérée du côté du premier bord longitudinal de chacune des pièces de support, s'emboîter en s'épanouissant à partir de la ligne définie par les premières extrémités de leurs conducteurs.

3. Tête d'impression selon la revendication 2, caractérisée en ce qu'elle comporte une pluralité de cartes de circuit imprimé (8) affectées individuellement aux différentes réglettes (7) pour l'alimentation de leurs conducteurs (C), chacune montée sur la réglette qui lui est affectée, en venant la prolonger, par engagement à pression de l'un des bords longitudinaux de la carte contre le second bord longitudinal de la pièce support de cette réglette et chacune portant des pistes conductrices, en nombre égal à celui des conducteurs de la réglette qui lui est affectée, ramenées, d'une part, le long dudit bord longitudinal de la carte au pas des conducteurs pour être en contact avec leurs secondes extrémités (Cb) et, d'autre part, par ensembles sur des entrées d'alimentation ($a_0$—$a_5$) en bout de la carte, sur une première extémité de la tête d'impression.

4. Tête d'impression selon l'une des revendications 2 et 3, et comportant deux lignes de stylets et deux lignes de contre-électrodes disposées sensiblement dans le même plan que les lignes de stylets et chacune associée à chaque ligne de stylets et définie par des premières extrémités ($C_{11a}$, $C_{12a}$) d'une rangée de conducteurs auxiliaires ($C_{11}$ et $C_{12}$), caractérisée en ce que les rangées de conducteurs auxiliaires ($C_{11}$, $C_{12}$) sont maintenues mécaniquement par deux pièces de support (30, 40), en matériau isolant, affectées chacune à l'une des rangées de conducteurs auxiliaires avec laquelle elle forme une réglette (3, 4) de conducteurs auxiliaires, montées sur les ensembles de réglettes (7) de conducteurs qu'elles recouvrent longitudinalement à l'exception de leurs stylets et présentant chacune, au niveau de la ligne des stylets à laquelle est associée la ligne de contre-électrodes qu'elle porte, une denture (34, 44) longitudinale assurant, au moins partiellement, le positionnement correct desdits stylets de cette ligne en regard desdites contre-électrodes de cette ligne et leur isolement convenable.

5. Tête d'impression selon la revendication 4, caractérisée en ce qu'elle comporte en outre, une carte unique de circuit imprimé (9) portant un circuit d'adressage des conducteurs auxiliaires ($C_{11}$, $C_{12}$) de l'une et l'autre des deux rangées qu'ils forment, montée entre les deux réglettes (3, 4) de conducteurs auxiliaires s'étendant, à l'opposé des deux rangées de contre-électrodes, au-delà des ensembles de réglettes de conducteurs en présentant l'une et l'autre une rangée de contacts ($C_{11b}$, $C_{12b}$) définis par les secondes extrémités de leurs conducteurs auxiliaires et mis en contact avec des extrémités de pistes conductrices portées par ladite carte 9 et ramenées par ailleurs, à travers ledit circuit d'adressage à des entrées d'adressage (E) de la tête d'impression, en bout de la carte sur une première extrémité de la tête.

6. Tête d'impression selon la revendication 1, caractérisée en ce qu'elle comporte:

— pour les conducteurs (C) de chacune des rangées, une pièce de support individuelle (70) formant avec eux un ensemble appelé réglette (7) de conducteurs, en matériau isolant et d'épaisseur croissant d'un premier bord longitudinal duquel débordent les premières extémités ($C_a$) des conducteurs qu'elle porte à sensiblement son second bord longitudinal sur lesquel les secondes extrémités ($C_b$) des conducteurs qu'elle porte sont repliées d'un même côté et forment des bornes, ladite pièce de support présentant deux faces complémentaires sur lesquelles sont définies, sur une partie de sa hauteur, des zones longitudinales alternées en saillie et en retrait, sensiblement complémentaires d'une face à l'autre pour l'assemblage par emboîtement des réglettes de conducteurs adjacentes et sur une partie terminale du côté de son second bord longitudinal, respectivement deux zones longitudinales terminales chacune en retrait sur la zone adjacente et, dont l'une échancrée longitudinalement laisse libres lesdites bornes ($C_b$)

— deux pièces cales terminales (5, 6) bordant longitudinalement d'un côté et de l'autre les réglettes (7) assemblées, présentant une face longitudinale tournée vers les réglettes complémentaire de celle de la réglette terminale correspondante, et

— une pluralité de cartes de circuit imprimé (8) chacune portant un circuit de connexion des conducteurs (C) de l'une des rangées pour leur alimentation, chacune associée à l'une des réglettes et montée enfichée entre la pièce de support (70) de cette réglette et la pièce de support de la réglette adjacente ou de la pièce-cale adjacente, entre les zones longitudinales terminales de leurs deux faces en regard, le circuit de connexion comportant des pistes conductrices d'une part ramenées sur l'un des bords longitudinaux de la carte où elles sont respectivement en contact avec les bornes ($C_b$) et d'autre part reliées par ensembles à des entrées d'alimentation ($a_0$—$a_5$) formées en bout de ladite carte, à une première extrémité de la tête, pour connecter par ensembles lesdites bornes ($C_b$) auxdites entrées ($a_0$—$a_5$).

7. Tête d'impression selon la revendication 6, dans laquelle lesdits conducteurs sont agencés en deux groupes de rangées distinctes, caractérisée en ce qu'elle comporte, en outre:

— deux rangées de conducteurs auxiliaires ($C_{11}$, $C_{12}$) dont des premières extémités ($C_{11a}$, $C_{11b}$) formant des contre-électrodes sont alignées respectivement sur deux lignes sensiblement au niveau des deux lignes formées par les premières extrémités des rangées de conducteurs ($C_a$) des deux groupes ($G_1$, $G_2$) auxquelles elles sont respectivement associées,
— une pièce de support individuele (30, 40) des conducteurs auxiliaires de chacune des rangées, en matériau isolant, les deux pièces de support (30, 40) pour les deux rangées de conducteurs auxiliaires étant assemblées aux réglettes (7), par emboîtement sur lesdites pièces-cales respectivement, en venant les border longitudinalement, et présentant chacune un rebord (33, 43) longitudinal à la surface extérieure duquel affleurent lesdites premières extrémités des conducteurs auxiliaires et à la face frontale duquel formant une denture (34, 44) sont insérées les premières extrémités des conducteurs des rangées du groupe ($G_1$ $G_2$) correspondant, et un bord longitudinal (39) à l'opposé de ce rebord, à ouverture longitudinale tournée vers lesdites réglettes dans laquelle débouchent les secondes extrémités cambrées ($C_{11b}$, $C_{12b}$) desdits conducteurs auxiliaires de la rangée considérée,
— une carte support de circuit imprimé (9), portant un circuit d'adressage des conducteurs auxiliaires ($C_{11}$, $C_{12}$) des deux rangées, montée entre les deux pièces de support (30, 40) des deux rangées de conducteurs auxiliaires, et maintenue par ses deux bords longitudinaux dans les ouvertures respectives des deux pièces de support (30, 40) des conducteurs auxiliaires en étant en contact avec lesdites secondes extrémités cambrées ($C_{11b}$, $C_{12b}$) de ces conducteurs auxiliaires, le circuit d'adressage présentant des sorties ramenées sur les bords longitudinaux de cette carte et en contact avec les secondes extrémités desdits conducteurs auxiliaires respectives et des entrées (E) formées en bout de cette carte, à ladite première extrémité de la tête.

## Claims

1. A print head comprising a plurality of styli constituted by first ends of electric conductors, these first ends being arranged along distinct parallel lines and being regularly spaced out on each line and offset from one line to the other, the conductors defining as many groups as there are lines of styli, characterized in that said electric conductors (C) in each group ($G_1$, $G_2$) are arranged in a plurality of distinct tiers which fan out one with respect to the other from the concerned line of styli sensibly according to distinct half-planes at least at the beginning of this line, and that each tier comprises the conductors, the styli of which, on their respective line, have equal ranks modulo the number of tiers of the group to which this tier belongs.

2. A print head according to claim 1, in which the conductors (C) of each one of said tiers are partially embedded in an individual support piece (70) made of insulating material, on which they define the styli (Ca) at a first longitudinal edge and connection terminals (Cb) by their second ends at the second longitudinal edge, these conductors constituting together with their support piece a unit called stripe (7) of conductors, characterized in that in each one of these stripes (7) said support piece (70) presents two longitudinal faces of such complementary shape, that successively adjacent stripes of at least one group of tiers of conductors can be engaged on part of their respective height on the side of the first longitudinal edge of each support piece and fan out from the line defined by the first end of their conductors.

3. A print head according to claim 2, characterized in that it comprises a plurality of printed circuit cards (8) belonging individually to the different stripes (7) for ensuring the power supply to their conductors (C), each card being mounted on the stripe which is attributed thereto and projects therefrom, by pushing one of the longitudinal edges of the card against the second longitudinal edge of the support piece of that stripe, and each card bearing as many conducting traces as there are conductors on the stripe which is attributed thereto, these traces being on the one hand brought to said longitudinal edge of the card at the distance pitch of the conductors in order to touch their second ends (Cb) and on the other hand in groups to power supply inputs ($a_0$—$a_5$) at the end of the card on a first end of the print head.

4. A print head according to one of the claims 2 and 3, comprising two lines of styli and two lines of counter-electrodes disposed sensibly in the same plane as the lines of styli, each one being associated to each line of styli and being defined by the first ends ($C_{11a}$, $C_{12a}$) of a tier of auxiliary conductors ($C_{11}$ and $C_{12}$), characterized in that the tiers of auxiliary conductors ($C_{11}$, $C_{12}$) are mechanically held by two support pieces (30, 40) made of insulating material and each attributed to one of the tiers of auxiliary conductors to constitute a stripe (3, 4) of auxiliary conductors, these tiers mounted on the group of stripes of conductors and covering longitudinally these stripes except their styli, and each presenting at the level of the line of styli to which the line of counter-electrodes is associated a longitudinal comb (34, 44) which ensures at least partially the proper positioning of said styli of said line with respect to said counter-electrodes of said line, and their convenient insulation.

5. A print head according to claim 4, characterized in that it further comprises a unique printed circuit card (9) bearing an address circuit für the auxiliary conductors ($C_{11}$, $C_{12}$) of one and the other of the two built-up tiers, this card being mounted between these two stripes (3, 4) of auxiliary conductors which extend at the opposite side of two tiers of counter-electrodes beyond the unit of stripes of conductors and present each a tier of tabs ($C_{11b}$, $C_{12b}$) defined by the second ends of their auxiliary conductors and brought into contact with end portions of conducting traces borne on said cards (9) and moreover brought through said addressing circuit to addressing inputs (E) of the print head at the end of the card on a first end of the head.

6. A print head according to claim 1, characterized in that it comprises:

— for the conductors (C) of each tier, an individual support piece (70) which constitutes with the conductors a unit called stripe (7) of conductors, made of insulating material and having a thickness which increases from a first longitudinal edge from which the first ends ($C_a$) of the conductors project, to sensibly its second longitudinal edge on which the second ends ($C_b$) of the conductors are folded back on one common side and constitute tabs, said support piece presenting two complementary surfaces on which, on a part of its height, longitudinal zones are defined which alternatingly project and recess, these zones being sensibly complementary from one surface to the other in order to allow a stack assembly of the adjacent stripes of conductors, whereas on a terminal part of these complementary surfaces on the side of its second longitudinal edge, two longitudinal terminal zones are defined, which are both recessed with respect to the adjacent zone and one of which is longitudinally cut out in order to let said tabs ($C_b$) remain free,

— two terminal packing pieces (5, 6) which border longitudinally on one side and the other the assembled stripes (7) and present a longitudinal surface turned towards the complementary stripes of the surface of the corresponding terminal stripe, and

— a plurality of printed circuit cards (8) each bearing a circuit for connecting the conductors (C) of one of the tiers in view of their power supply, each one associated to one of the stripes and mounted in a stack configuration between the support piece (70) of said stripe and the support piece of the adjacent stripe or of the adjacent packing piece between the longitudinal end zones of their two mutually facing surfaces, the connection circuit comprising conducting traces which on the one hand are brought to one of the longitudinal edges of the card for entering into contact with the respective tabs ($C_b$) and on the other hand connected groupwise to power supply inputs ($a_0$—$a_5$) which are made at the end of said card at a first end of the head for connecting groups of said tabs ($C_b$) to said inputs ($a_0$—$a_5$).

7. A print head according to claim 6, in which said conductors are arranged in two groups of distinct tiers, characterized in that it further comprises:

— two tiers of auxiliary conductors ($C_{11}$, $C_{12}$), the first ends of which ($C_{11a}$, $C_{11b}$) constituting counter-electrodes are aligned respectively on two lines sensibly at the level of the two lines built by the first ends of the tiers of conductors ($C_a$) of the two groups ($G_1$, $G_2$) to which they are respectively associated,

— an individual support piece (30, 40) of the auxiliary conductors of each one of the tiers, made of insulating material, the two support pieces (30, 40) for the two tiers of auxiliary conductors being assembled to the stripes (7) by a stack assembly on said packing pieces respectively by bordering them longitudinally and each one presenting a longitudinally protruding edge (33, 43) at the outer surface of which said first ends of the auxiliary conductors are flush-positioned and at the frontal surface of which constituting a comb (34, 44) the first ends of the conductors of the tiers of the corresponding group ($G_1$, $G_2$) are inserted, whereas this support piece presents at the opposite side of said protruding edge a longitudinal edge (39) having a longitudinal opening which is turned towards said stripes and in which the second bent ends ($C_{11b}$, $C_{12b}$) of said auxiliary conductors of the considered tier emerge,

— a printed circuit card (9) bearing an address circuit for the auxiliary conductors ($C_{11}$, $C_{12}$) of the two tiers, this card being mounted between the two support pieces (30, 40) of the two tiers of auxiliary conductors and being maintained by its two longitudinal edges in the respective openings of the two support pieces (30, 40) of the auxiliary conductors and being in contact with said second bent ends ($C_{11b}$, $C_{12b}$) of said auxiliary conductors, the address circuit presenting outputs which are brought to the longitudinal edges of said card and are in contact with the second ends of said respective auxiliary conductors, and inputs (E) built up at the end of said card at said first end of the head.

**Patentansprüche**

1. Druckkopf mit einer Vielzahl von je vom ersten Ende eines elektrischen Leiters gebildeten Stiften, wobei diese Enden gemäß parallelen getrennten Zeilen angeordnet sind, indem sie in regelmäßigem Abstand auf jeder Zeile positioniert und von einer Zeile zu einer anderen versetzt sind, und wobei die Leiter ebensoviele Gruppen definieren, wie es Zeilen von Stiften gibt, dadurch gekennzeichnet, daß die elektrischen Leiter (C) in jeder der Gruppen ($G_1$, $G_2$) in einer Vielzahl von getrennten Reihen angeordnet sind, die sich fächerartig von der betrachteten Stiftzeile im wesentlichen gemäß getrennten Halbebenen, zumindest am Zeilenanfang, ausbreiten, und daß jede der Reihen die Leiter enthält, deren Stifte in ihrer Zeile gleiche Rangordnung modulo der Anzahl der Reihen der Gruppe, der diese Reihe angehört, besitzen.

2. Druckkopf nach Anspruch 1, in dem die Leiter (C) jeder Reihe teilweise in je einem eigenen Trägerstück (70) aus Isoliermaterial eingelassen sind, auf dem sie die Stifte (Ca) an einen ersten Längsrand und Anschlußklemmen (Cb) mit ihren zweiten Enden an einem zweiten Längsrand definieren, wobei diese Leiter mit ihrem Trägerstück eine Leiterstreifen (7) genannte Gruppe bilden, dadurch gekennzeichnet, daß in jedem der Streifen (7) das Trägerstück (70) zwei Längsseiten mit komplementären Formen aufweist, die so gestaltet sind, daß aufeinanderfolgende Streifen zumindest einer gemeinsamen Leiterreihe über einen Teil ihrer betrachteten Höhe auf der Seite des ersten Längsrands jedes der Trägerstücke sich ineinander verschachteln, indem sie sich fächerhaft ausgehend von der durch die ersten Enden ihrer Leiter definierten Linie ausbreiten.

3. Druckkopf nach Anspruch 2, dadurch gekennzeichnet, daß er eine Vielzahl von Druckschaltungskarten (8) aufweist, die einzeln den verschiedenen Streifen (7) für die Stromversorgung ihrer Leiter (C) zugeordnet sind und je auf dem ihnen zugeordneten Streifen montiert sind, indem sie den Streifen verlängern, derart, daß einer der Längsränder der Karte gegen den zweiten Längsrand des Trägerstücks dieses Streifens unter Druck anliegt, wobei jede Karte soviele Leitbahnen besitzt, wie Leiter im zugeordneten Streifen vorhanden sind und die Streifen einerseits entlang des Längsrandes der Karte entsprechend dem Abstand der Leiter herausgeführt sind, um in Kontakt mit deren zweiten Enden (Cb) zu stehen, und andererseits in Gruppen an Versorgungseingänge ($a_0$—$a_5$) am Ende der Karte an einem ersten Ende des Druckkopfes angeschlossen sind.

4. Druckkopf nach einem der Ansprüche 2 und 3, bei dem zwei Stiftzeilen und zwei Zeilen von Gegen-Elektroden vorgesehen sind, die im wesentlichen in derselben Ebene wie die Stiftzeilen liegen und je jeder Stiftzeile zugeordnet sind, sowie durch erste Enden ($C_{11a}$, $C_{12a}$) einer Reihe von Hilfsleitern ($C_{11}$ und $C_{12}$) definiert sind, dadurch gekennzeichnet, daß die Reihen von Hilfsleitern ($C_{11}$, $C_{12}$) mechanisch durch zwei Trägerstücke (30, 40) aus einem Isoliermaterial gehalten werden, die je einer der Hilfsleiterreihen, mit der sie einen Hilfsleiterstreifen (3, 4) bildet, zugeordnet sind und die auf der Gesamtheit von Leiterstreifen (7) montiert sind, die sie in Längsrichtung mit Ausnahme ihrer Stifte überdecken und die je in Höhe der Stiftzeile, der die Zeile von sie tragenden Gegen-Elektroden zugeordnet ist, eine Längszahnreihe (34, 44) besitzt, die zumindest teilweise die genaue Positionierung der Stifte dieser Zeile gegenüber den Gegen-Elektroden dieser Zeile sowie deren ausreichende Isolierung gewährleistet.

5. Druckkopf nach Anspruch 4, dadurch gekennzeichnet, daß er außerdem eine einzelne Druckschaltungskarte (9) besitzt, die einen Adressierschaltkreis für die Hilfsleiter ($C_{11}$, $C_{12}$) zur Adressierung der beiden sie bildenden Reihen besitzt, der zwischen den beiden Hilfsleiterstreifen (3, 4) gegenüber den beiden Reihen von Gegen-Elektroden jenseits der Gruppen von Leiterstreifen montiert ist, wobei diese Leiterstreifen je eine Reihe von durch die zweiten Enden ihrer Hilfsleiter definierten Kontakten ($C_{11b}$, $C_{12b}$) aufweisen, die mit den Enden von Leiterbahnen auf dieser Karte (9) in Berührung gebracht sind, wobei diese Bahnen im übrigen über den genannten Adressierschaltkreis an Adressiereingänge (E) des Druckkopfes am Ende der Karte und an einem ersten Ende des Kopfes zusammengeführt sind.

6. Druckkopf nach Anspruch 1, dadurch gekennzeichnet, daß er folgende Bauteile enthält:

— für die Leiter (C) jeder Reihe ein eigenes Trägerstück (70) aus Isoliermaterial, das mit ihnen eine Leiterstreifen (7) genannten Einheit bildet und eine von einem ersten Längsrand, über den die ersten Enden ($C_a$) ihrer Leiter hervorragen, bis im wesentlichen zu seinem zweiten Längsrand zunehmende Dicke aufweist, an dem die zweiten Enden ($C_b$) ihrer Leiter auf eine gemeinsame Seite umgebogen sind und Klemmen bilden, wobei das Trägerstück zwei zueinander komplementäre Seiten besitzt, an denen über einen Teil ihrer Höhe Längszonen abwechselnd vorspringend und nicht vorspringend von im wesentlichen komplementärer Form an einer Seite im Vergleich zur anderen definiert sind, so daß die benachbarten Leiterstreifen ineinander verschachtelt werden können, und an denen in einem Endbereich auf der Seite des zweiten Längsrandes zwei Endzonen in Längsrichtung ausgebildet sind, die je gegenüber der benachbarten Zone zurückgesetzt sind und von denen eine in Längsrichtung ausgeschnitten ist, um die genannten Klemmen ($C_b$) freizulassen;

— zwei Unterlegstücke (5, 6) am Ende, die in Längsrichtung zu beiden Seiten die montierten Streifen (7) umgeben und eine den Streifen zugewandte Längsseite besitzen, die komplementär zur Längsseite des entsprechenden letzten Streifens ist, und

— eine Vielzahl von Druckschaltungskarten (8), die je einen Anschlußschaltkreis für die Leiter (C) einer der Reihen für deren Stromversorgung tragen, je einem der Streifen zugeordnet sind und zwischen dem Trägerstück (70) dieses Streifens und dem Trägerstück des benachbarten Streifens oder dem benachbarten Unterlegstück zwischen den Endzonen in Längsrichtung der beiden einander zugewandten Seiten eingesteckt montiert sind, wobei der Verbindungsschaltkreis Leitbahnen besitzt, die einerseits auf einen der Längsränder der Karte geführt sind, an dem sie in Kontakt mit den einzelnen Klemmen $(C_b)$ sind, und die andererseits in Gruppen in Versorgungseingänge $(a_0$—$a_5)$ angeschlossen sind, die am Ende der Karte an einem Ende des Kopfes ausgebildet sind, um die Klemmen $(C_b)$ in Gruppen an diese Eingänge $(a_0$—$a_5)$ anzuschließen.

7. Druckkopf nach Anspruch 6, in dem die Leiter in zwei Gruppen getrennter Reihen angeordnet sind, dadurch gekennzeichnet, daß er außerdem folgende Bauteile aufweist:

— zwei Reihen von Hilfsleitern $(C_{11}, C_{12})$, deren erste Enden $(C_{11a}, C_{11b})$ Gegen-Elektroden bilden und auf zwei Zeilen im wesentlichen in Höhe der beiden von den ersten Enden der Leiterreihen $(C_a)$ der beiden entsprechenden Gruppen $(G_1, G_2)$ gebildeten Zeilen ausgerichtet sind,
— ein eigenes Trägerstück (30, 40) aus Isoliermaterial für die Hilfsleiter jeder Reihe, wobei die beiden Trägerstücke (30, 40) für die beiden Hilfsleiterreihen auf den Streifen (7) durch Verschachteln mit den entsprechenden Unterlegstücken angebracht sind, indem sie in Längsrichtung an diesen anliegen und je einen überstehenden Längsrand (33, 43) aufweisen, an dessen äußerer Oberfläche die ersten Enden der Hilfsleiter bündig abschließen und an dessen Stirnseite in Form einer Zahnreihe (34, 44) die ersten Enden der Leiter der Reihen der entsprechenden Gruppe $(G_1, G_2)$ eingefügt sind, wobei ein Längsrand (39) gegenüber diesem vorspringenden Rand mit einer den genannten Streifen zugewändten Längsöffnung vorgesehen ist, in der die zweiten umgebogenen Enden $(C_{11b}, C_{12b})$ der genannten Hilfsleiter der betrachteten Reihe münden,
— eine Druckschaltungskarte (9), die einen Adressierschaltkreis für die Hilfsleiter $(C_{11}, C_{12})$ der beiden Reihen trägt und zwischen den beiden Trägerstücken (30, 40) der beiden Hilfsleiterreihen montiert ist, sowie von seinen beiden Längsrändern in den entsprechenden Öffnungen der beiden Trägerstücke (30, 40) der Hilfsleiter festgehalten wird, wobei sie in Kontakt steht mit den gekannten zweiten umgebogenen Enden $(C_{11b}, C_{12b})$ dieser Hilfsleiter und der Adressierschaltkreis Ausgänge, die an die Längsränder dieser Karte geführt sind und in Kontakt mit den zweiten Enden der Hilfsleiter stehen, und Eingänge (E) besitzt, die am Ende der Karte am genannten ersten Ende des Kopfes ausgebildet sind.

# FIG.1

FIG.2

0059920

# FIG.3

$C_a$

$C$ $(C_1....C_8)$

7

70

71

72

77

IV

73

$C_b$

76

77

74

75

# FIG.4

# FIG.5

# FIG.6

# FIG.7

# FIG.8

FIG.9

FIG.10

FIG.11

FIG.12

FIG.13